# EUROPEAN PATENT SPECIFICATION

(11) **EP 0 595 475 B1**
(45) Date of publication and mention of the grant of the patent: **08.07.1998**
(21) Application number: 93307725.7
(22) Date of filing: 29.09.1993
(51) Int. Cl.: B29D 23/24

(54) **Method and device for manufacturing a bent rubber pipe**
Verfahren und Vorrichtung zur Fertigung eines gebogenen Gummirohres
Procédé et dispositif pour fabriquer un tuyau coudé en caoutchuoc

(30) Priority: 29.09.1992 JP 283711/92; 29.09.1992 JP 283712/92; 29.09.1992 JP 283713/92; 29.09.1992 JP 283714/92
(43) Date of publication of application: 04.05.1994
(60) Divisional application: 96200510.4
(73) Proprietor: YAMASHITA RUBBER KABUSHIKI KAISHA, Iruma-Gun, Saitama (JP)
(72) Inventor: Matsuda, Nobuya, c/o Yamashita Rubber, Iruma-Gun, Saitama (JP); Chida, Kohji, c/o Yamashita Rubber, Iruma-Gun, Saitama (JP); Toyoda, Shigeki, c/o Yamashita Rubber, Iruma-Gun, Saitama (JP); Awaji, Hiroyuki, c/o Yamashita Rubber, Iruma-Gun, Saitama (JP); Hasegawa, Tetsuo, c/o Yamashita Rubber, Iruma-Gun, Saitama (JP); Shimizu, Kenji, c/o Yamashita Rubber, Iruma-Gun, Saitama (JP); Sugie, Seishiroh, c/o Yamashita Rubber, Iruma-Gun, Saitama (JP)
(74) Representative: Piésold, Alexander J.

(56) References cited:
- DE-A- 2 140 956
- GB-A- 1 048 788
- GB-A- 1 105 398
- US-A- 2 366 853

## Description

The present invention relates to a method for manufacturing a bent rubber pipe and a device therefor.

In order to manufacture a bent rubber pipe, for example, bent three-dimensionally, it is known to perform a fitting step for placing a straight pipe-like molding material (hereinafter referred to as a semi-finished rubber product) of an unvulcanised or semi-vulcanised rubber on a curved mandrel, a vulcanizing step for forming a rubber pipe fixed in a curved shape by heating and vulcanizing the semi-finished rubber product in a condition fitted on the mandrel, and an extracting step for removing the vulcanized rubber pipe from the mandrel.

Also, in the fitting step, die lubricant has been applied to facilitate connecting and disconnecting of the semi-finished rubber product to the mandrel. This lubricant application has been effected by manual operations such as dipping the semi-finished rubber product into a tank containing the die lubricant.

Further, because in the fitting step the semi-finished rubber product which is easy to bend is manually pushed on to the mandrel, the fitting must be effected by a careful, slow and relatively time consuming pushing action so that the semi-finished rubber product does not buckle or bend during fitting, whereby this step is time consuming and is difficult to automate.

Also, the extracting step is effected by a manual operation which must be carried out immediately after vulcanization in order to handle the pipe at a condition of high temperature, so as to lessen the extracting load when the bent rubber pipe is removed from the mandrel. For this reason, the operation must be performed in a very difficult operating environment having high temperature and high humidity. Thus, it is necessary to take relatively frequent rest periods and also it is difficult to increase operating efficiency.

In addition, in the aforesaid step of applying the die lubricant, it is impossible to avoid the die lubricant being applied on both the inner and outer surfaces of the semi-finished rubber product. However, the die lubricant is required to be applied only on the inner surface of the semi-finished rubber product. Lubrication of the outer surface is unnecessary and the lubricant applied to the outer surface is wasted.

It is also necessary to effect a dripping out treatment in which the excess die lubricant is dripped out from the semi-finished rubber product pulled up from the tank after dipping, and more time is required for this treatment.

Further, there is a tendency to worsen the operating environment because of conditions in which the tank for die lubricant remains open and the die lubricant is spilled on the floor in the dripping out treatment, and costs are incurred for effecting a draining treatment, together with cleaning.

It is therefore desirable to provide a method and a device for manufacturing a bent rubber pipe being capable of improving the operating efficiency of the fitting step, adapting to bulk production, and attaining automation.

In DE-A-2140956 (Phoenix Gummiwerke), which forms the preambles of claims 1 and 6, there is disclosed a method for manufacturing a bent rubber pipe comprising a fitting step of placing a straight pipe-like semi-finished rubber product of unvulcanized or semi-vulcanized rubber on a curved mandrel, the fitting steps comprising arranging a rectilinear guide member on the same axis as that of the mandrel, and pushing out the semi-finished rubber product from said guide member on said mandrel by pushing an end thereof remote from the mandrel so as to fit the semi-finished rubber product on the mandrel, a vulcanizing step of forming a rubber pipe fixed in a curved shape by heating and vulcanizing the semi-finished rubber product in a condition fitted on the mandrel, and an extracting step of removing the vulcanized rubber pipe from the mandrel.

Also disclosed in that document is a device for manufacturing a bent rubber pipe by placing a straight pipe-like semi-finished rubber product of unvulcanized or semi-vulcanized rubber on a curved mandrel, and heating and vulcanizing the semi-finished rubber product in a condition fitted on the mandrel, the device comprising a curved mandrel, a straight guide member arranged on an axis identical to that of the mandrel for supporting the straight pipe-like semi-finished rubber product, and pushing means for pushing the semi-finished rubber product from the guide member on the mandrel by pushing an end thereof remote from the mandrel.

In GB 1048788 (Goodyear) there is disclosed apparatus for removing a rubber hose from a mandrel which includes gripping means for gripping one end of the hose.

According to a first aspect of the invention, the method is characterized in that die lubricant is applied only on inner surfaces of the semi-finished rubber product before the lubricated inner surface of the semi-finished rubber product contacts the mandrel during fitting of the semi-finished rubber product.

In claim 2, the manufacturing method is characterized in that, according to claim 1, the die lubricant is applied only to the inner surfaces the rubber semi-finished product, at the same time by inserting a nozzle into a hollow portion of the rubber semi-finished product being supported on the guide member and allowing the die lubricant to discharge from the nozzle.

In claim 3, the manufacturing method is characterized in that, according to claim 2, the guide member is tubular and the rubber semi- finished product is supported in a hollow portion of the guide member, whereby the die lubricant is applied while the nozzle displaces in an axial direction in the hollow portion of the rubber semi-finished product.

In claim 4, the manufacturing method is characterized in that, according to claim 2, the die lubricant is applied to the inside of the rubber semi-finished product, by inserting the guide member into the hollow portion of the rubber semi-finished product, by utilizing the guide member as a nozzle by providing a delivery passage for die lubricant in the guide member and a discharge port communicating with the delivery passage, and by pushing out the rubber semi-finished product.

In claim 5, the manufacturing method is characterized by that, according to claim 2, for the extracting step, a periphery of one end of the rubber pipe is gripped by a gripping member at a condition of relatively high temperature immediately after vulcanizing, and the gripping member is pulled along the axial direction of the mandrel, whereby the rubber pipe is extracted from the mandrel.

According to a second aspect of the present invention, the device for manufacturing a bent rubber pipe set forth in DE-A-2140956 is characterized in that the device comprises means for applying die lubricant only to an inner surface of the semi-finished rubber product before the lubricated inner surface of the semi-finished rubber product contacts the mandrel during fitting of the semi-finished rubber product on the mandrel.

In claim 7, the device set forth in claim 6 is characterized in that the guide member is a hollow member, in a hollow portion of which the rubber semi-finished product is supported.

In claim 8, the device for manufacturing a bent rubber pipe set forth in claim 7 is characterized in that the pushing means are provided with a head portion for pushing the end surface opposite to the mandrel side of the rubber semi-finished product, and a recess in which a free end of the mandrel is capable of fitting on the head portion.

In claim 9, the device for manufacturing a bent rubber pipe set forth in claim 7 is characterized in that a head portion is provided to push the end surface opposite to the mandrel side of the rubber semi-finished product toward the pushing means, and an air passage is provided in the head portion to communicate the inner space of the rubber semi-finished product and an outer space of the head portion.

In claim 10, the device for manufacturing a bent rubber pipe set forth in claim 6 is characterized in that the rubber semi-finished product is supported in a condition covered on the guide member.

In claim 11, the device for manufacturing a bent rubber pipe set forth in claim 6 comprises a mandrel base from which the mandrel projects in cantilever fashion and which is displaceable on guide rails to a vulcanizing device, and an extracting device arranged along the guide rails at the free end of the mandrel, the guide member being capable of guiding the semi-finished rubber product along the axial direction of the mandrel, the pushing means being provided at a position in which the guide member is inserted between the guide rails and being capable of pushing out the semi-finished rubber product supported on the guide member in the direction of the mandrel, and the extracting device being capable of extracting the rubber pipe from the mandrel by displacing the gripping member gripping a periphery of one end of the vulcanized rubber pipe along the axial direction of the mandrel.

In claim 12, the device for manufacturing a bent rubber pipe set forth in claim 11 is characterized in that work stand rails are arranged parallel to the guide rails to insert the guide member therebetween, that the work stand rails are adapted to freely displace thereon a first work stand on which the pushing device is provided and a second work stand on which the extracting device is provided, that a plurality of mandrel bases are adapted to support mandrels in plural rows and plural steps, and that siding rails one of which is connected to the guide rails and the other of which extends to intersect to the latter, is provided to guide the mandrel bases to a siding position provided between the guide rails and the work stand rails.

In claim 13, the device for manufacturing a bent rubber pipe set forth in claims 6 to 10 is characterized in that centering means are provided on a supporting base of the guide member to allow an axial center of the guide member to coincide with an axial center of the mandrel, the guide member being mounted on the supporting base of the guide member through the intermediary of the centering means.

In claim 14, the device for manufacturing a bent rubber pipe set forth in claims 6 to 10 is characterized in that one end of the mandrel is cantilevered on the mandrel base and positioning means is provided to arrange the other end of the mandrel concentrically with the guide member.

According to the invention of claim 1, since the rubber semi-finished product can be covered on the periphery of the mandrel by pushing the end surface opposite to the mandrel side of the rubber semi-finished product supported on the guide member, the rubber semi-finished product can be fitted without buckling and smoothly, and the operating time in the fitting step is significantly shortened whereby it is possible to improve the operating efficiency. Further, since the die lubricant is applied according to needs on inner surfaces of the rubber semi-finished product before the fitting step, it is economical and healthy, as well as it improves the operativity by its automation. Furthermore, it can obtain the better health environment in the production site.

According to the features of claim 2, since the die lubricant can be applied only to the inner surfaces of the rubber semi-finished product, by inserting a nozzle into a hollow portion of the rubber semi-finished product and discharging the die lubricant from the nozzle, the applying range can be limited only to the necessary minimum portion and is very economical. Moreover, it makes it possible to effect bulk production and automation.

Also, it is unnecessary to perform the dripping out treatment as in the prior art and it is possible to improve the operating efficiency, as well as a condition in which the die lubricant is spilled on the floor surface when dripping out to contaminate the floor surface is solved, and the tank for die lubricant can be sealed. Moreover, it is possible to lessen the dispersing amount of the die lubricant because it is applied inside the rubber semi-finished product.

Therefore, it is possible to attain the better operating environment and to reduce the cost of draining treatment.

According to the features of claim 3, because the nozzle is possible to displace in the axial direction in the hollow portion of the rubber semi-finished product by allowing the outside of the latter to be supported by the guide member, the die lubricant can be applied only to the inner surface of the rubber semi-finished product over its entire length.

According to the features of claim 4, since the inside of the rubber semi-finished product is supported by the guide member and the latter is utilized as a nozzle, it is unnecessary to provide a separate nozzle in addition to the guide member, since the latter is a member fixed, the die lubricant applying device is simple in its structure.

According to the features of claim 5, since the gripping member is used in the extracting step and the rubber pipe is extracted at the relatively high temperature immediately after vulcanizing, the waiting time is lessened and the bent rubber pipe can be extracted immediately after vulcanizing. Therefore, the shaping cycle can be shortened. Furthermore, since it can be automated, the performance of bulk production is improved and the operator can be released from the severe operating environment by hands.

According to the invention of claim 6, because the rubber semi-finished product can be pushed from the guide member without buckling and fitted on the mandrel by pushing one end surface opposite to the mandrel side of the rubber semi-finished product supported on the guide member, the operating time can be shortened significantly in the fitting step, and moreover, since the automation is possible by using the pushing device, the operating efficiency is further improved.

According to the features of claim 7, since the guide member is a hollow member and the rubber semi-finished product is supported in the hollow portion, the rubber semi-finished product is capable of fitting on the mandrel without buckling, with the outer periphery thereof.

According to the features of claim 8, since the recess in which a free end of the mandrel is capable of fitting on the head portion is provided, when fitting the rubber semi-finished product, it is possible to adjust the end position of the rubber semi-finished product on the mandrel, and the shaping can be facilitated if the dispersion exists in the length of the rubber semi-finished product.

According to the features of claim 9, since the head portion is provided with the air passage, the air inside of the rubber semi-finished product can be rapidly displaced from the air passage to the outer space of the head portion when the rubber semi-finished product is pushed out, whereby the air resistance is lessened and it is possible to attain the more smooth fitting operation.

According to the features of claim 10, since the straight pipe-like rubber semi-finished product is supported in the periphery of the guide member, the rubber semi-finished product can be fitted on the mandrel without buckling with supporting the inner periphery thereof. Moreover, because the air inside the rubber semi-finished product displaces to the outer space of the head portion through the air passage of the head portion, the structure can be simplified at the side of the pushing device.

According to the invention of claim 11, because the bent rubber pipe is shaped successively and further the automation is possible, the shaping efficiency is high and it is possible to obtain a labor-saving device. Further, because the application of the die lubricant can be performed continuously at the necessary amount and further,can be automated, it is possible to obtain the device which can be better in its operating performance and also which can be better in the healthy environment of the site.

According to the features of claim 12, since the first and second work stands are freely displaced on the work stand rails, the separate step can be performed at the same time to the plurality of mandrel bases on the guide rails, and it is possible to shape a lot of bent rubber pipes at the same time and continuously. Further, since it can automated, it is possible to obtain the device being suitable for bulk production.

According to the features of claim 13, since the centering means are provided on the supporting base of the guide member to allow an axial center of the guide member to coincide with an axial center of the mandrel and the guide member is mounted on the supporting base of the guide member through the intermediary of the centering means, the guide member can be precisely centered on the same axis as the axis of the mandrel by the centering means, whereby the centering and mounting operations of the guide member become rapid and exact.

According to the features of claim 14, since the one end of the mandrel is cantilevered on the mandrel base and the positioning means are provided to arrange the other end of the mandrel concentrically with the guide member, when the one end of the mandrel is mounted on the mandrel base, the other end can be precisely centered on the same axis as the axis of the mandrel member, and the centering and mounting operations of the mandrel become rapid and exact, as well as the operating performance is improved significantly.

Certain preferred embodiments of the invention will now be described by way of example and with reference to the accompanying drawings, in which:-
Figure 1 is a flow view showing the principle of operation of the embodiments of the present invention;
Figure 2 is a side cross sectional view showing a device for fitting a rubber product to a mandrel, being a first embodiment;
Figure 3 is a side cross sectional view showing certain parts of the above fitting device to an enlarged scale;
Figure 4 is a cross sectional view taken along line IV-IV of Figure 3;
Figure 5 is a view for explaining actuation of the fitting device;
Figure 6 is a view showing a variation of a head portion shown in Figure 3;
Figure 7 is a side cross sectional view showing certain parts of a fitting device of a second embodiment;
Figure 8 is a cross sectional view taken along line VIII-VIII in Figure 7;
Figure 9 is a cross sectional view showing an extracting device for extracting a rubber pipe from a mandrel;
Figure 10 is an enlarged cross sectional view taken along line X-X in Figure 9;
Figure 11 is a view showing actuation of certain parts during the extracting step (the condition immediately before gripping);
Figure 12 is a view showing actuation of certain parts during the extracting step (the condition of rotation in an escaping direction);
Figure 13 is a view showing actuation of certain parts during the extracting step (the condition of rotation in a biting direction);
Figure 14 is a cross sectional view showing certain parts of a variant of the extracting device;
Figure 15 is a cross sectional view showing certain parts of a further variant of the extracting device;
Figure 16 is a cross sectional view showing certain parts of a further variant of an extracting device;
Figure 17 is a cross sectional view showing certain parts of a further variant of an extracting device;
Figure 18 is a schematic view showing a die lubricant applying device using a method of applying die lubricant of a third embodiment;
Figure 19 is an enlarged view showing certain parts of the device of Figure 18;
Figure 20 is a schematic view showing a die lubricant applying device using a method of applying die lubricant, being a fourth embodiment;
Figure 21 is an enlarged view showing certain parts of the Figure 20;
Figure 22 is a plan view showing the arrangement of a device for simultaneously shaping plural pipes, being a fifth embodiment;
Figure 23 is a view showing certain parts in a direction of arrow J in Figure 22;
Figure 24 is a view showing certain parts in a direction of arrow J in Figure 22;
Figure 25 is a view showing certain parts in a direction of arrow K in Figure 22;
Figure 26 is a view showing certain parts in a direction of arrow K in Figure 22;
Figure 27 is a front elevation showing a supporting base portion of a base for a guide member of a device for simultaneously shaping plural pipes, being a sixth embodiment;
Figure 28 is a side view partially cut away showing the supporting base of the guide member of the sixth embodiment;
Figure 29 is a view enlarged and partially cut away showing a portion of a seventh embodiment;
Figure 30 is a partial front elevation corresponding to Figure 27 showing certain parts of a guide member, being an eighth embodiment;
Figure 31 is a partially cut away side view corresponding to Figure 28 showing certain parts of the guide member of the eighth embodiment;
Figure 32 is a partial cross sectional view taken along line XXXII-XXXII in Figure 33 of a mandrel base portion of a ninth embodiment;
Figure 33 is a partially cut away side view showing the mandrel base portion of a fourteenth embodiment;
Figure 34 is an enlarged cross sectional view taken along line XXXIV-XXXIV in Figure 32;
Figure 35 is an enlarged cross sectional view taken along line XXXV-XXXV in Figure 32;
Figure 36 is an enlarged cross sectional view taken along line XXXVI-XXXVI in Figure 33;
Figure 37 is a view showing the portion corresponding to Figure 36 of a tenth embodiment; and
Figure 38 is a view showing a different use of the portion corresponding to Figure 34 of an eleventh embodiment.

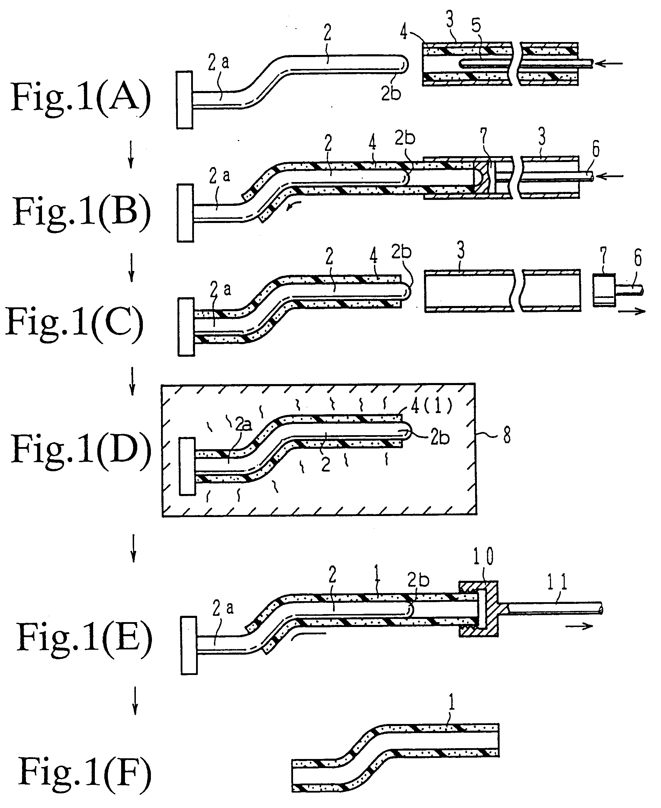

Figure 1 is a view showing the principles of operation during a fitting step, a vulcanizing step and an extracting step in a method of manufacturing a bent rubber pipe according to one embodiment of the present invention in sequential manner.

The stages A, B, C show a fitting step, stage D a vulcanizing step, and stages E, F an extracting step. Further, the outline shown in the F stage is a cross sectional form of a bent rubber pipe 1 being a finished article. This bent rubber pipe is bent three-dimensionally.

First of all, in the fitting step stage A shows a condition in which mandrel 2, a guide member 3 and a semi-finished rubber product 4 are arranged on the same axis.

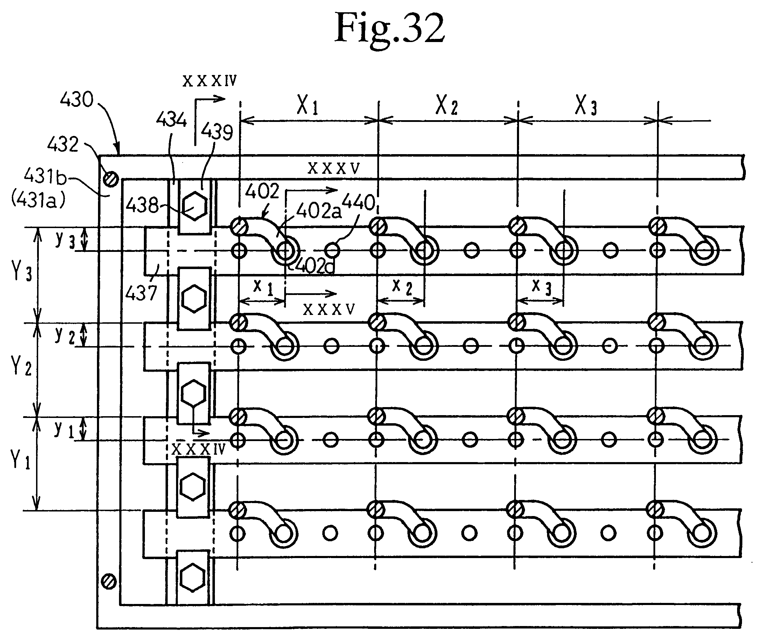

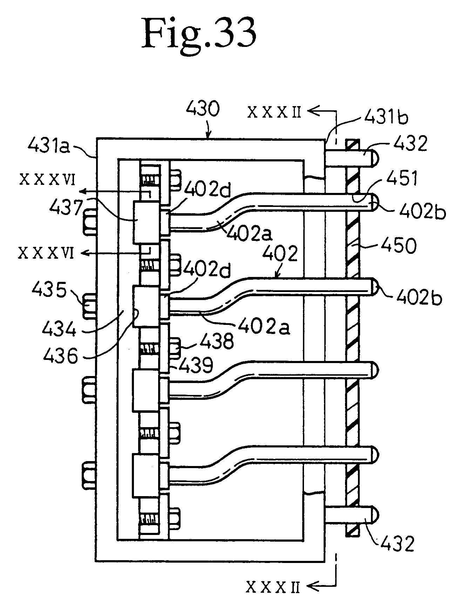

The mandrel 2 is cantilevered on a mandrel base (see reference numeral 430 in Figures 32 and 33), and is bent in the same shape as that desired for the bent rubber pipe 1 (F stage). The mandrel 2 is provided with a base portion 2a and a free end 2b, and the straight pipe-like guide member 3 is arranged adjacent to an axis of the mandrel and the free end 2b on the same axis.

Into a hollow portion of the guide member 3 is inserted the semi-finished rubber product 4 having a substantially straight pipe shape, which is supported to freely displace in the lengthwise direction of the guide member 3.

Used as a rubber semi-finished product 4 are EPT, NBR, NBR and PVC copolymer, SBR, CR, NR and any other suitable rubber materials or blends of those suitably combined, or blends of a suitable material among them and another material, if necessary, a material including short fibers kneaded into rubber, a material including reinforced yarn or woven textile, a material having a surface knitted with reinforced yarn, or the like.

Further, in accordance with the invention as defined in claims 1 and 6, at the A stage, a nozzle 5 is inserted inside the semi-finished rubber product 4 before fitting the latter, and is adapted to advance and retract in an axial direction of the semi-finished rubber product whilst discharging die lubricant, whereby the die lubricant is applied to the inner surface of the semi-finished rubber product 4.

At the B stage, an arm 6 constituting part of a pushing device described hereinafter is pushed into the guide member 3 from an end opposite to the mandrel 2, and a head 7 which has a size generally equal to the inner diameter of the guide member 3, mounted on a leading end of the arm 6 is abutted to one end of the semi-finished rubber product 4, whereby the latter is pushed out of the end of the mandrel 2.

Then, the semi-finished rubber product 4, is pushed on to the mandrel 2 so as to cover it, easily bending in order to do so. It does not however tend to buckle in front of the mandrel 2 because the semi-finished rubber product is guided at its periphery by the straight pipe-like guide member 3 together with the mandrel 2 on the same axis. The product 4 is then pushed out laterally as it approaches the base portion 2a by the bent part of the mandrel 2.

The C stage is a condition in which the fitting of the semi-finished rubber product has been completed, and the semi-finished rubber product 4 is fitted on the periphery of the mandrel and is curved in the same shape as the mandrel. Simultaneously, the arm 6 and head 7 are retracted from the inside of the guide member 3 to outside thereof.

The D stage is the vulcanizing step, and the semi-finished rubber product is moved into a vulcanizing device 8 in its condition fitted on the mandrel 2, and is vulcanized by heating at a required temperature, pressure and time thereby to form the bent rubber pipe 1 fixed with the same shape as the mandrel 2.

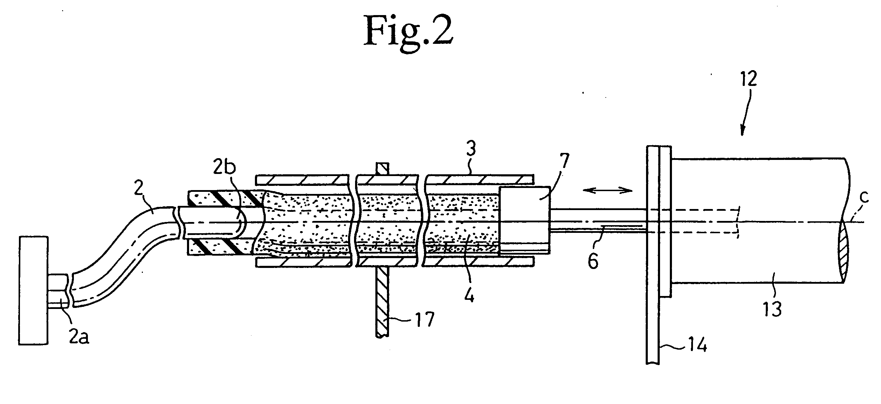

In the E stage, one end of the bent rubber pipe 1 taken out from the vulcanizing device 8 after vulcanizing is gripped by means of a gripping member 10, and thereafter, an arm 11 of a plunger (see reference numeral 13 in Figure 2 ) mounting the gripping member 10 on a leading end thereof is retracted along the axis of the mandrel 2, whereby the bent rubber pipe 1 is extracted from the mandrel 2.

At this time, the bent rubber pipe 1 is extracted in the axial direction of the mandrel 2 whilst deforming according to curves of the latter. However, because the bent rubber pipe is at a relatively high temperature immediately after vulcanizing, this tends to reduce the extraction load and smooth operation can be attained.

The F stage shows the bent rubber pipe 1 thus extracted and removed from the mandrel 2 and the bent rubber pipe 1 is restored to the required bent shape corresponding to the mandrel 2.

Figures 2 to 6 are intended to explain a first embodiment of a fitting device used in the fitting step, and as shown in Figure 2, the device is constituted by the mandrel 2, the guide member 3 and a pushing device 12.

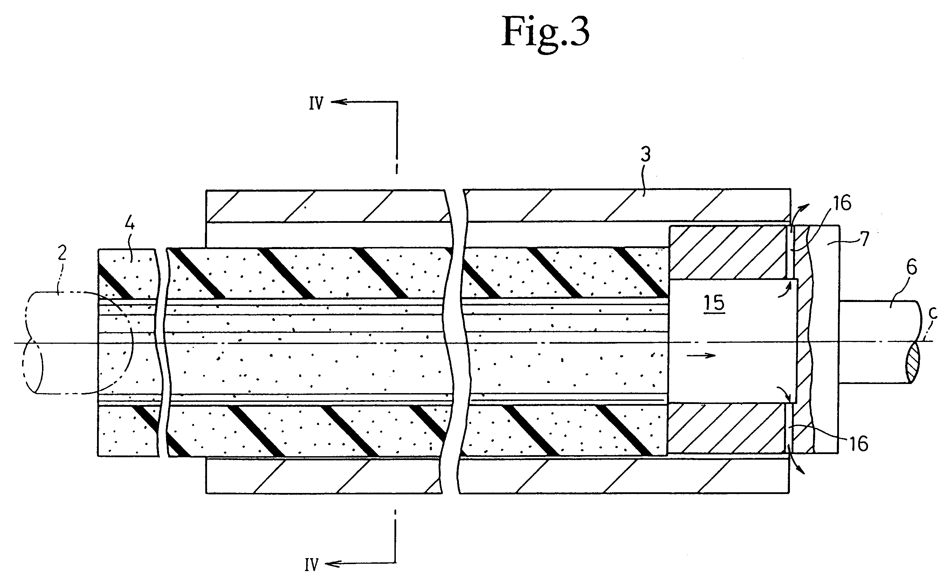

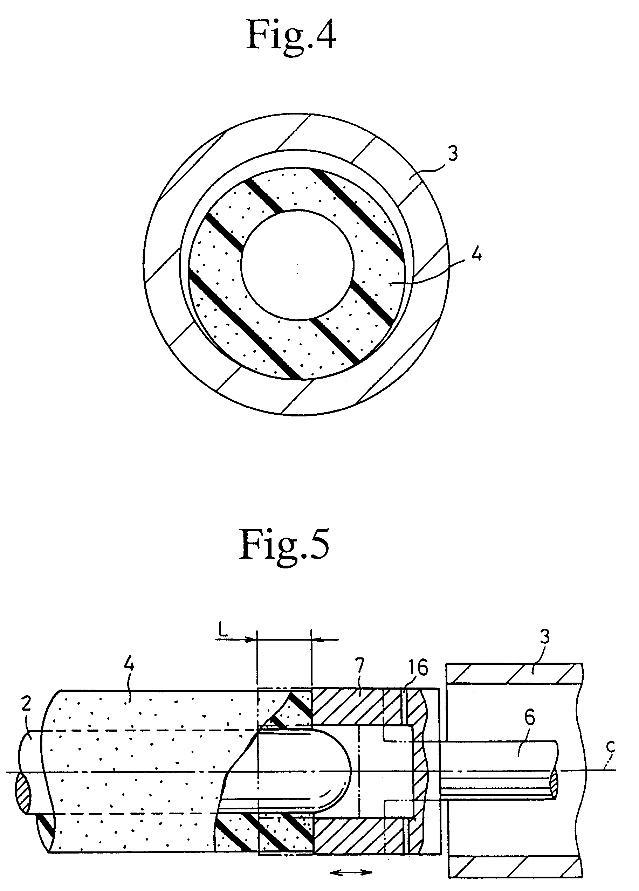

The pushing device 12 is constituted by the aforesaid arm 6, the head 7 and a plunger 13 which is arranged coaxially with the guide member 3 together with the arm 6 and which is supported on a work stand 14. The arm 6 is extensible by the plunger 13, and at the most extended position, the head 7 abuts the free end 2b of the mandrel 2, whereby the semi-finished rubber product 4 can be fully pushed onto the mandrel 2. Further, as shown in Figure 3, a recess 15 is formed in the leading end of the head 7, and as shown in Figure 5, the free end 2b of the mandrel 2 is capable of fitting up to a certain depth in the recess 15. Also, an air passage 16 is formed in a radial direction of the head 7 in order to communicate the recess 15 with atmosphere at the lateral periphery of the head 7.

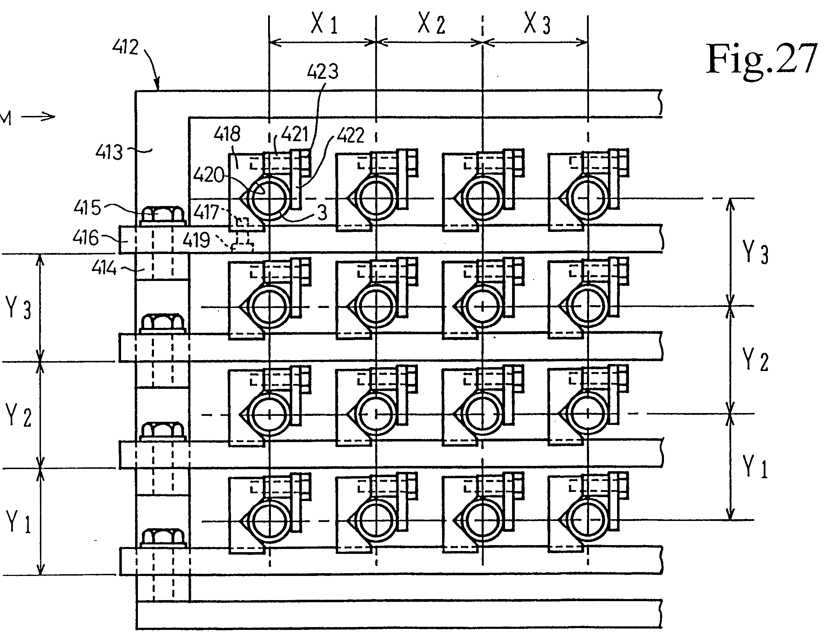

As seen in Figures 3 and 4, the semi-finished rubber product 4 is supported in the hollow portion of the guide member 3 with a certain lateral play to enable it easily to move in its axial direction. Further, reference numeral 412 in Figure 27 shows a supporting member of the guide member 3.

The following description is made about the method using the device of the first embodiment. In Figure 2, first of all, the mandrel 2 and the guide member 3 are arranged on the same axis and, into the hollow portion of the guide member 3 is inserted the semi-finished rubber product 4, on an inner surface of which die lubricant is applied. Thereafter, when the arm 6 is advanced by the plunger 13 of the pushing device 12, the head 7 enters into the hollow portion of the guide member 3 (Figure 5 ), and pushes the end surface of the semi-finished rubber product 4 remote from the mandrel.

For this reason, as shown in Figure 5, the semi-finished rubber product 4 displaces within the hollow portion of the guide member 3 in the direction of the mandrel 2, and when the head 7 appears at the mandrel 2 end of the guide member 3 after passing therethrough, the whole semi-finished rubber product is fitted on the periphery of the mandrel 2.

During this step, since the guide member 3 supports the outer periphery of the semi-finished rubber product 4, the latter is not buckled when pushed out onto the mandrel 2, and a smooth fitting is obtained. Further, since air compressed inside the semi-finished rubber product 4 when fitting is pushed out from the head 7 to the hollow portion of the guide member 3 through the intermediary of the air passage of the head 7, it is possible to lessen resistance when fitting due to the air inside the semi-finished rubber product. Therefore, it is possible significantly to shorten the operating time for the fitting step. Furthermore, since fitting is automated by using the pushing device 12, operating efficiency is further improved.

Moreover, as apparent from Figure 5, since the free end of the mandrel 2 is able to fit up to a certain depth into the recess 15 of the head 7, if extent of advance of the arm 6 is adjusted, the position of the end surface of the semi-finished rubber product 4 on the mandrel 2 can be adjusted in an arbitrary range L. This is advantageous if semi-finished rubber products 4 are provided in various lengths.

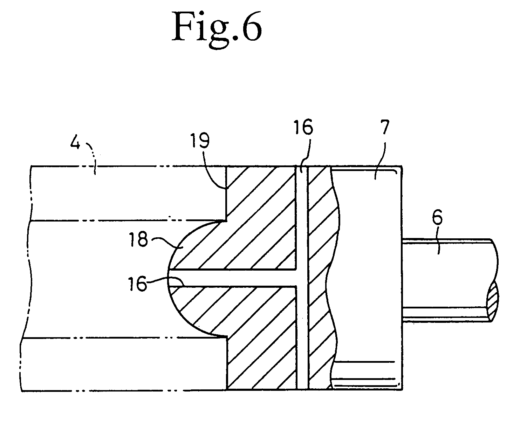

Further, it is possible for the head 7 not to have the recess 15. For example, as shown in Figure 6, the head 7 has a leading shaft portion 18 arranged to project towards the mandrel 2, a peripheral shoulder portion 19 for abutting the end surface of the semi-finished rubber product, and an air passage 16.

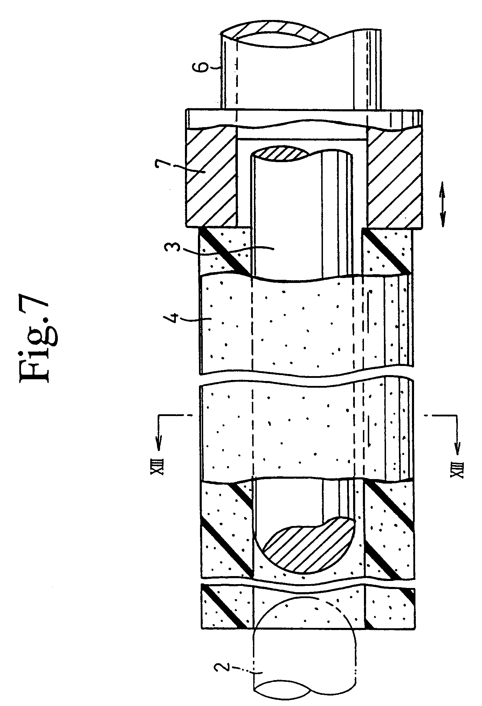

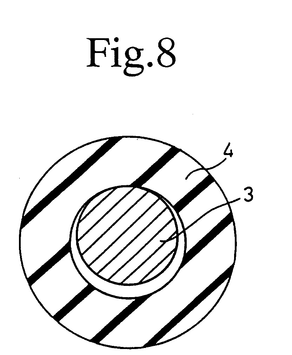

Figures 7 and 8 are used to explain a second embodiment of the fitting device, and use common reference numerals for parts having functions common to those of the embodiment shown in Figures 2 to 6 (this is also the case with the other following embodiments).

In the second embodiment, the guide member 3 is of solid shaft shape and is somewhat thinner than an inner diameter of the semi-finished rubber product 4. Accordingly, the latter is supported on the periphery of the guide member 3, and the head 7 is capable of sliding on the periphery of the guide member 3. Also when thus constructed, since the semi-finished rubber product 4 is supported at its inside by the guide member 3, smooth fitting can be obtained without buckling. Further, the head 7 can omit the recess 15 and the air passage 16 as in the first embodiment.

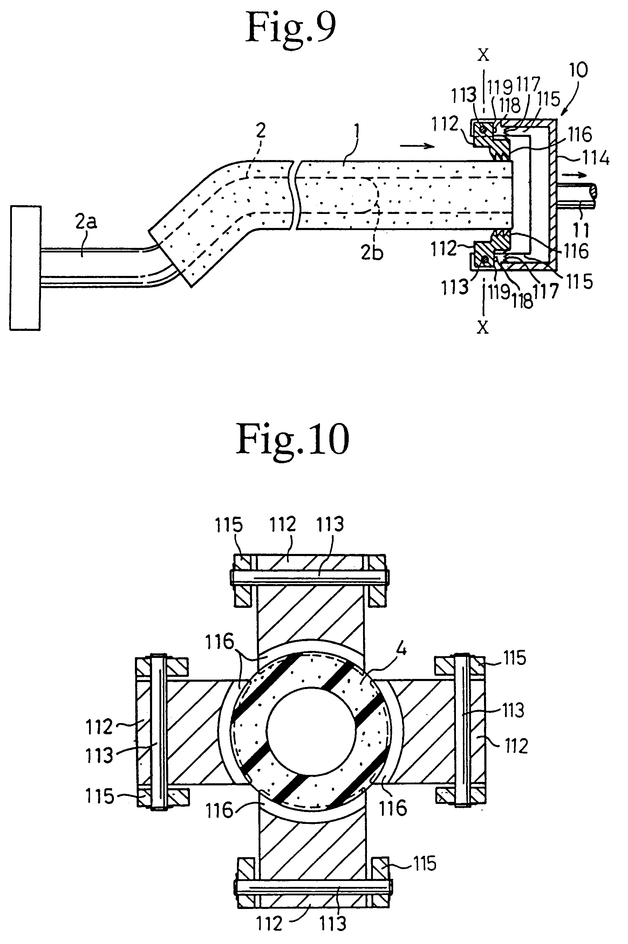

Figures 9 to 17 show devices for extracting the bent rubber pipe from the mandrel. Although the devices shown are not part of the invention per se, they are described to aid understanding of later embodiments.

Figure 9 is a view showing a device for the extracting step and shows stage E of Figure 1 being the extracting step in a condition enlarged and more detailed. Figure 10 is a cross sectional view taken along line X-X in Figure 9.

On the gripping member 10 a plurality of pawls 112 are rotatably mounted by respective supporting pins 113 each extending in a direction transverse to the axis of the mandrel 2. Each supporting pin 113 is mounted on a leading end of an arm 115 which is bent from a bracket 114 provided on a leading end of the arm 11. On the pawls are formed saw tooth-like tooth portions 116 which are rotated and energized in a direction biting in the outer periphery of the bent rubber pipe 1 by means of a compression spring 117 tensed between the pawl 112 and the arm portion 115. Further, a stopper 118 which limits the rotating amount of the pawl 112 is provided on the arm 115 in a position abutting a shoulder portion of the pawl 112.

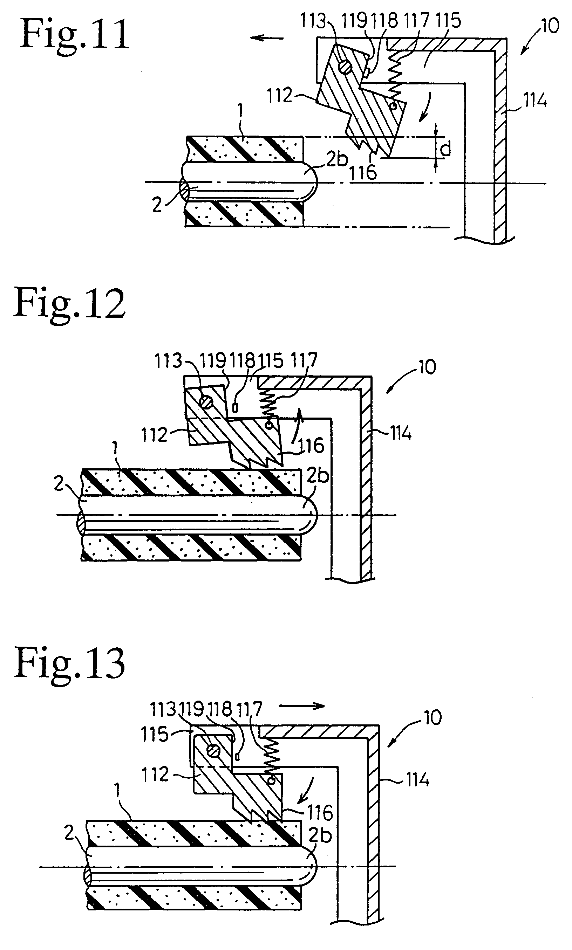

As apparent from Figure 10, the pawls 112 are provided at positions dividing the periphery of the bent rubber pipe 1 into substantially four equal length portions and a face circle formed by joining the leading ends of each tooth portion 116 is adapted to be smaller than the outer periphery of the bent rubber pipe 1 (see Figure 11). Accordingly, the tooth portions 116 of the pawls 112 are able to grip the periphery of the bent rubber pipe 1 with substantially unified force. Four pawls 112 need not necessarily be provided and in general it is possible to provide three or more pawls.

The following description is made about operation of the device in Figures 11 to 13. Further, Figures 11 to 13 are enlarged views showing different operating conditions of the parts of the gripping member 10.

Figure 11 shows a condition before gripping the bent rubber pipe 1 after starting the extracting step, the pawl 112 being energized by means of the spring 117 to rotate in a clock wise direction around the supporting pin 113, as well as the shoulder 119 abutting the stopper 118 to stop the tooth portion 116 at a position at which it extends by a dimension "d" into the end projection of the outer periphery of the bent rubber pipe 1. In this condition, when the gripping member 10 is displaced in the direction of the free end 2b of the mandrel 2, the gripping action is performed. In the gripping action, the tooth portion 116 firstly contacts the leading end of the bent rubber pipe 1. Then, as shown in Figure 12, the pawl 112 is pushed by the bent rubber pipe 1 and causes the spring 117 to compress against the action of the latter, whereby the pawl rotates to retract in a counter clockwise direction. The pawl 112 runs along the outer periphery of the bent rubber pipe 1 with frictional contact by the tooth portion 116. At this time, since the latter is inclined in the extracting direction, the rotation of the pawl 112 in the retraction direction can occur.

When the gripping member 10 stops the displacement thereof, the pawl 112 rotates in the opposite direction to the retraction direction, that is, in a biting direction being the clockwise direction in Figure 13 under the restoring resiliency of the spring 117, whereby the tooth portions 116 bite into the outer periphery of the bent rubber pipe 1 and the substantially unified force grips the periphery. Then, as shown in Figure 13, when the gripping member 10 is displaced in the extracting direction, the tooth portions 116 bite into the periphery of the bent rubber pipe 1, and the latter moves in the extracting direction integrally with the gripping member 10, and is extracted from the mandrel 2. At this time, the end of the bent rubber pipe 1 is gripped at the periphery thereof with the unified force and it can be extracted without deforming or tending to be flattened. Further, since the tooth portion 116 has a saw tooth shape inclined in the extracting direction, the extracting action tends to increase the biting into the periphery of the bent rubber pipe 1, so that it is possible to extract positively.

Though the extracting step is performed at a high temperature condition immediately after vulcanizing the bent rubber pipe 1 in order to lessen the extracting load, because the operation is performed by a machine, it is unnecessary for an operator to work under severe conditions of high temperature and high humidity, as in the case of a manual extraction operation.

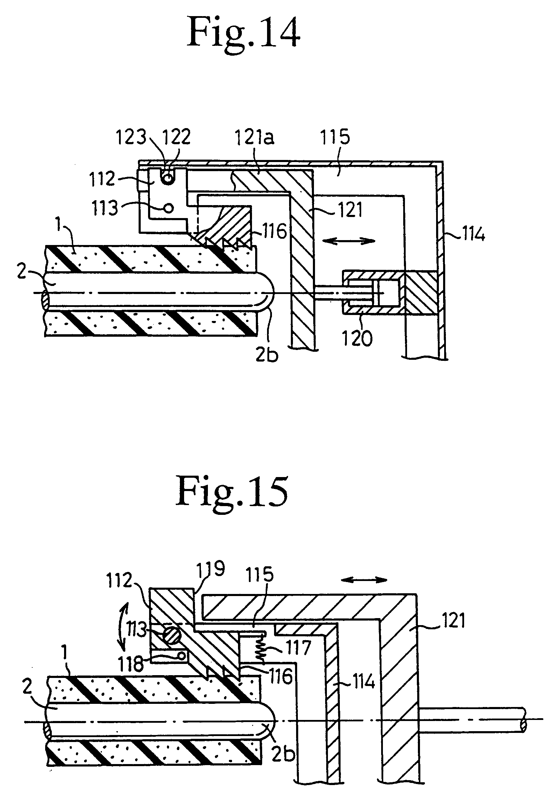

Figure 14 is an enlarged view showing the parts of the gripping member 10 according to a variant of the device for the extracting step.

This variant is designed to be capable of rotating forcedly the pawl 112 in either the biting direction or the escaping direction, and on a bracket 114 is provided a slider 121 which is able to advance and retract coaxially of the mandrel 2 through the intermediary of a plunger 120. The slider 121 is one embodiment of the forcedly rotating means according to the present invention, and has an arm portion 121a a periphery of which extends in a direction overlapping with the mandrel 2. A pin 122 provided on a leading end of the arm portion 121a engages an engaging portion 123 which is provided on the pawl 112 and which is cut away in a U shape.

When the plunger 120 is expanded and the slider 121 is moved in the direction of the free end 2b, the pawl 112 pushed against the pin 122 rotates in the retraction direction (counter clockwise direction in the Figure) about the supporting pin 113, and if the slider 121 is moved adversely, the pawl 112 rotates in the biting direction (clockwise direction in the Figure). Thus, since the pawl 112 is capable of rotating in the retraction direction before it contacts with the bent rubber pipe 1, the pawl 112 can run smoothly on the periphery of the bent rubber pipe 1, without resistance by the gripping action. It is also possible to lessen the damage to the outer surface of the bent rubber pipe 1 due to pawl 112. Furthermore, since the pawl is capable of rotating in the biting direction without depending on the spring, the biting action can be made positively and it is possible to adjust the biting degree. It is also possible to facilitate the operation of removing the bent rubber pipe 1 from the pawl 112.

Figure 15 is an enlarged view showing the gripping member 10 according to a further variant of the device for the extracting step. In this variant, the pawl 112 is designed to forcedly rotate only in the retraction direction.

That is, the slider 121, which provides the forcedly rotating means, is provided outside of the bracket 114, a leading end of the slider 121 being designed to abut the shoulder 119 of the pawl 112 constituted similar to the third embodiment. When the slider 121 is moved to advance to the left in the Figure, the leading end of the slider 121 abuts the shoulder 119 and the pawl 112 is rotated in the counter clockwise direction, that is, in the retraction direction.

Adversely, when the slider 121 is moved to retract to the right in the Figure, the pawl 112 is rotated by means of the spring 117 in the clockwise direction in the Figure, that is, in the biting direction, whereby the tooth portion 116 is designed to bite on the periphery of the bent rubber pipe 1.

Further, in this variant, the spring 117 is constituted as a tension spring, and rotation in a direction closing the pawl 112 is intended to stop at a required position by means of the stopper 118.

Thus, the pawl 112 may be rotated forcedly only in the retraction direction, and the rotation on the biting direction can be performed rapidly by means of the spring 117. Because of this rotation, the particular movement of the slider 121 is not necessary, and therefore, the pawl 112 becomes simple in its rotating operation.

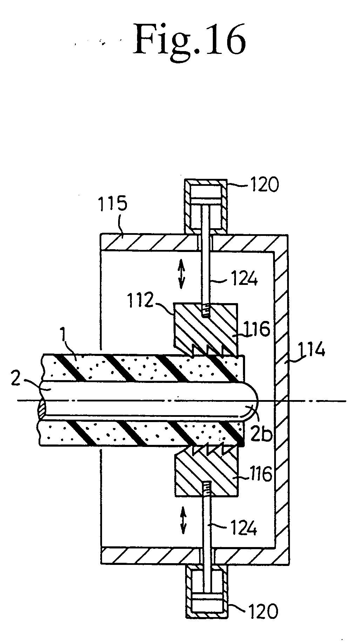

Figure 16 is an enlarged view showing the gripping member 10 of a further variant relating to the device for the extracting step. In this variant, the movement of the pawl 112 is intended to perform linearly in a radial direction of the bent rubber pipe 1 by forcedly opening and closing means constituted by means of the plunger 120.

That is, on the arm portion 115 of the bracket 114 is provided the plunger 120, an extensible rod 124 of which is arranged so that its axial direction coincides with the radial direction of the bent rubber pipe 1, the leading end of the extensible rod 124 being connected to the pawl 112. Such a plunger 120 is provided to correspond to each pawl 112 about the periphery of the bent rubber pipe 1, and when the extensible rod 124 is extended by the plunger 120, each pawl 112 moves in synchronism to the biting position inside the radial direction of the bent rubber pipe 1, and the tooth portions 116 bite into the periphery of the bent rubber pipe 1 by the fact that the face circle is closed to become smaller than the outer diameter of the bent rubber pipe 1.

Adversely, when the plunger 120 contracts the extensible rod 124, each of the pawls 112 moves in synchronism in a radially outward direction, whereby the face circle of the tooth portion 116 adopts an opening position larger than the outer diameter of the bent rubber pipe 1, and the pawl 112 is opened so that the tooth portion 116 is separated from the bent rubber pipe 1.

Therefore, because the pawl 112 does not rotate upon the gripping and biting actions as in the devices for the extracting step mentioned above, it is possible to minimize the damage to the outer surface of the bent rubber pipe 1 due to the tooth portion 116, and the rapid and positive opening action is effected when the bent rubber pipe 1 is gripped and is removed from the pawl 112.

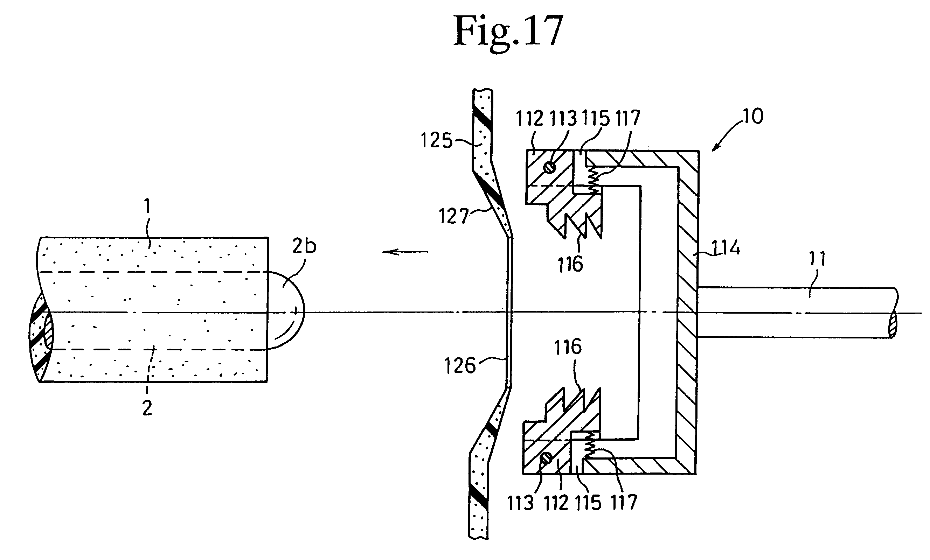

Figure 17 is an enlarged view showing the gripping member 10 according to a further variant relating to the extracting step. In this variant, the gripping member 10 is identical to that of the first extracting device described above, and an aligning guide 125 is provided between the free end 2b of the mandrel 2 and the gripping member 10. The aligning guide 125 is a disc-like member concentric with them, and has a central guide opening 126 with an inner diameter substantially identical to the outer diameter of the bent rubber pipe 1. The aligning guide is united with the gripping member 10 by mounting on the side of the bracket 114 so as to become concentric with the face circle of the tooth portion 116 of the pawl 112. Also, on the aligning guide 125 is formed a guide slant surface 127 which is directed in a center direction at a periphery of the guide opening 126 and which inclines in the extracting direction.

In order to grip the bent rubber pipe 1, when the gripping member 10 is moved to the free end 2b, the guide slant surface 127 of the aligning guide 125 contacts the leading end (adjacent the free end 2b side) of the bent rubber pipe 1,and moves in a direction transverse to the axis whilst sliding along the leading end of the bent rubber pipe 1 so as to allow the leading end of the latter to coincide with the guide opening 126, so that the aligning guide 125 aligns the gripping member with the pipe 1.

Therefore, even if disorder exists somewhat between the axes of the mandrel 2 and the gripping member 10, since, under the aligning action of the aligning guide 125, the pawl 112 of the gripping member 10 runs smoothly on the bent rubber pipe 1 and is able to grip it, it is possible to reduce the initial centering precision when arranging concentrically the mandrel 2 and the gripping member 10, and the centering operation becomes easy.

Further, the device for the extracting step is capable of various modifications. For example, the pawl 112 need not necessarily rotate or move, and may be fixed integrally with the gripping member 10. In this case, if the tooth portion 116 is saw tooth-like as mentioned above, the pawl 112 can perform the gripping action and the biting action.

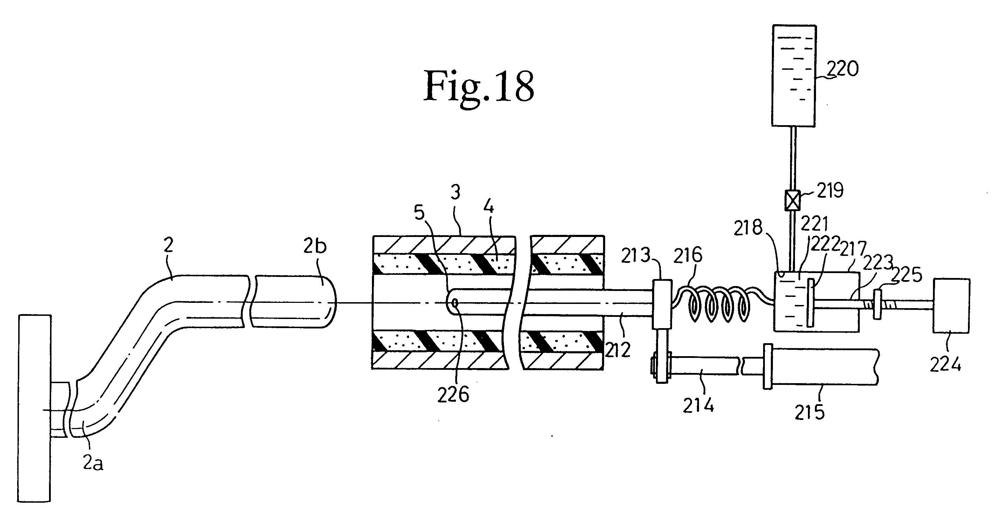

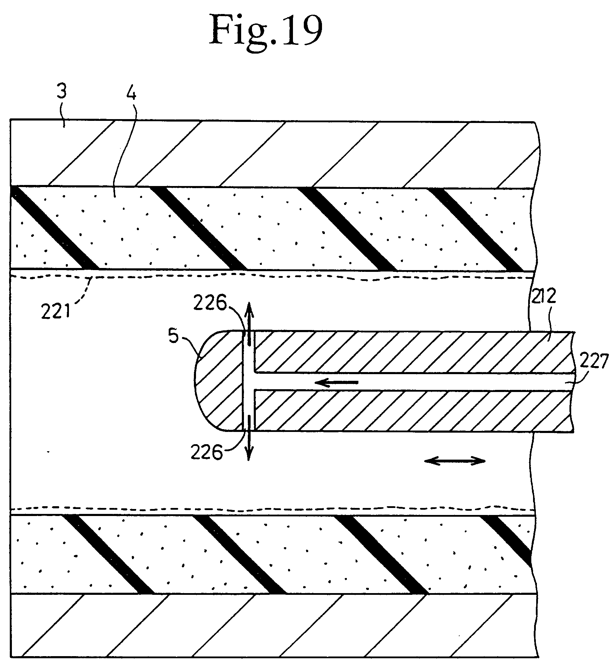

Figures 18 and 19 are views showing a third embodiment relating to the die lubricant applying device used in the applying step of a liquid-like die lubricant in the method for manufacturing bent rubber pipe.

In Figure 18, provided integrally with the nozzle 5 is a nozzle arm 212 which extends from the nozzle 5 inserted into the hollow portion of the semi-finished rubber product 4 and which extends outside the guide member 3. On the other end of the nozzle arm 212 is provided an injection head 213 connected to a leading end of an extensible arm 214. The extensible arm 214 is able to extend and contract by means of a plunger 215, and with its extension and contraction, the nozzle arm 212 advances and retracts in the hollow portion of the semi-finished rubber product 4 in the axial direction, so that the nozzle 5 is designed to move in the axial direction. The injection head 213 is connected to a liquid chamber 218 of a fixed quantity machine 217 of a plunger type through the intermediary of a flexible tube 216, and further, the liquid chamber 218 for die lubricant is connected with a tank 222 through the intermediary of a valve 219.

The die lubricant 221 in the liquid chamber 218 is pushed by a piston 222, and the required amount corresponding to a displaced amount of the piston 222 is delivered to the injection head 213 under pressure through the flexible tube 216. Further, the die lubricant 221 is fed from the injection head 213 to the nozzle arm 212 via the nozzle 5, and is discharged from the nozzle 5. The valve 219 is a one way valve, and is able to supply the die lubricant 221 from the tank 220 to the liquid chamber 218, since the valve is closed when a pressure in the liquid chamber 218 is higher than the required pressure and is opened when the pressure is lower than the required pressure. The displacement of the piston 222 is performed by allowing one end of a piston rod 223 extending from the piston 222 to the outside of the fixed quantity machine 217 to be advanced and retracted by a suitable driving device 224 such as a hydraulic plunger.

Further, at a middle portion between the fixed quantity machine 217 of the piston rod 223 and the driving device 224 is provided a fixed quantity adjusting member 225 for limiting the displacement of the piston 222 by abutting a wall of the fixed quantity machine 217. The fixed quantity adjusting member 225 is capable of displacing in the axial direction of the piston rod 223 to change the distance between the quantitative adjusting member 225 and the piston 222, whereby it is possible to adjust the fixed quantity of the die lubricant 221 supplied to the nozzle 5 side according to compression degree of the piston 222.

Figure 19 is an enlarged view showing the nozzle 5 forming a discharge port 226 which is oriented to the inner surface of the semi-finished rubber product. In the axial direction of the nozzle arm 212 is formed a supply passage 227 communicating with the discharge port 226 at one end, the other end of the supply passage 227 being connected to the injection head 213 (Figure 18).

The following description is made about the applying method performed by using the device of the third embodiment being the step of applying the liquid die lubricant. Firstly, in Figure 18, the nozzle 5 and the nozzle arm 212 are inserted in the hollow portion of the semi-finished rubber product 4 supported in the hollow portion of the guide member 3.

Continuously, when the required amount of the die lubricant is supplied from the fixed quantity machine 217 to the injection head 21 under pressure through the flexible tube 216, the die lubricant 221 is discharged, as shown in Figure 19, from the discharge port 226 to the inner surface of the rubber product 4 through the supply passage 227. Then, when the extensible arm 214 of the plunger 215 is extended and contracted, the nozzle arm 212 integral with the arm 214 is advanced and retracted in the semi-finished rubber product 4, whereby the nozzle 5 is displaced in the hollow portion of the rubber semi-finished product in the axial direction.

As a result of this, the inner surface of the semi-finished rubber product is applied with the die lubricant over the entire length thereof. For this reason, it is possible to automate the application of the die lubricant. Furthermore, since the dripping out treatment of the die lubricant is unnecessary, it makes it possible to improve significantly the operating efficiency of the applying step.

Also, the die lubricant is difficult to spill on the floor surface, the tank 222 can be hermetically sealed, and the dispersion amount of the die lubricant to the circumference can be lessened because the application is performed in the inner surface of the semi-finished rubber product 4, whereby it is possible to have a better operating environment and to reduce the cost of the draining treatment.

Furthermore, the application of the die lubricant can be limited only to the inner surface of the semi-finished rubber product 4, and since the outer surface is not applied, it is performed without excessive application as in the prior art and is economical.

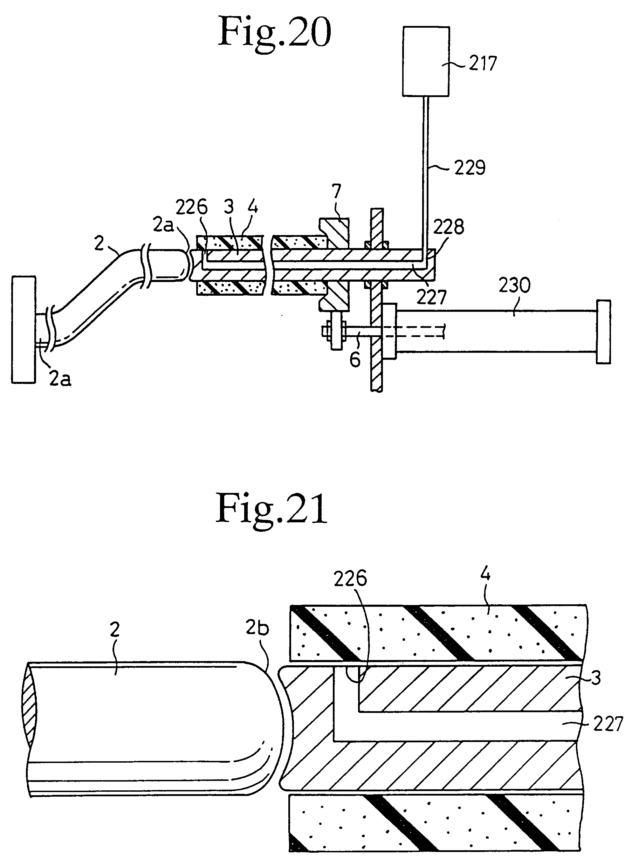

Figures 20 and 21 explain a fourth embodiment of the die lubricant applying device used in the step for applying the liquid die lubricant relating to the method for manufacturing bent rubber pipe.

As shown in Figure 20, in the fourth embodiment, the guide member is provided inside the semi-finished rubber product 4 and serves as a nozzle. That is, the guide member 3 is a somewhat thinner linear member than the inner diameter of the semi-finished rubber product 4 and is arranged concentrically with the mandrel 2.

At one end of the guide member 3 near the end face of the free end 2b of the mandrel 2 is formed a discharge port 226 oriented to the inner surface of the semi-finished rubber product 4, and a supply passage 227 formed in the axial center of the guide member 3 communicates between the discharge port 226 and an injection passage 228 formed radially in the other end of the guide member 3.

The injection passage 228 is connected to the die lubricant supply side of the fixed quantity machine 217 via a pipe 229. The fixed quantity machine 217 is similar to the third embodiment.

The head 7 for pushing the end surface opposite to the mandrel end of the semi-finished rubber product 4 is fitted on the outer periphery of the guide member 3 and is connected to the extensible arm 6 of a plunger 230. Then, the die lubricant is fed under pressure from the fixed quantity machine 217 to the discharge port 226 via the pipe 229 and the injection passage 228 so as to discharge from the discharge port 226, and the arm 6 is expanded to allow the head 7 to be moved towards the mandrel 2. Thus, the semi-finished rubber product 4 is pushed out onto the mandrel 2 and at the same time the die lubricant is applied to the inner surface of the semi-finished rubber product 4 immediately before fitting it on the mandrel 2. Accordingly, with this method, it is unnecessary to provide the nozzle separate from the guide member 3, and since the latter remains fixed, the device for applying the die lubricant can have a simple structure. Furthermore, since it is possible to fit the semi-finished rubber product 4 on the mandrel 2 and at the same time, to apply the die lubricant, the operating efficiency can be further improved.

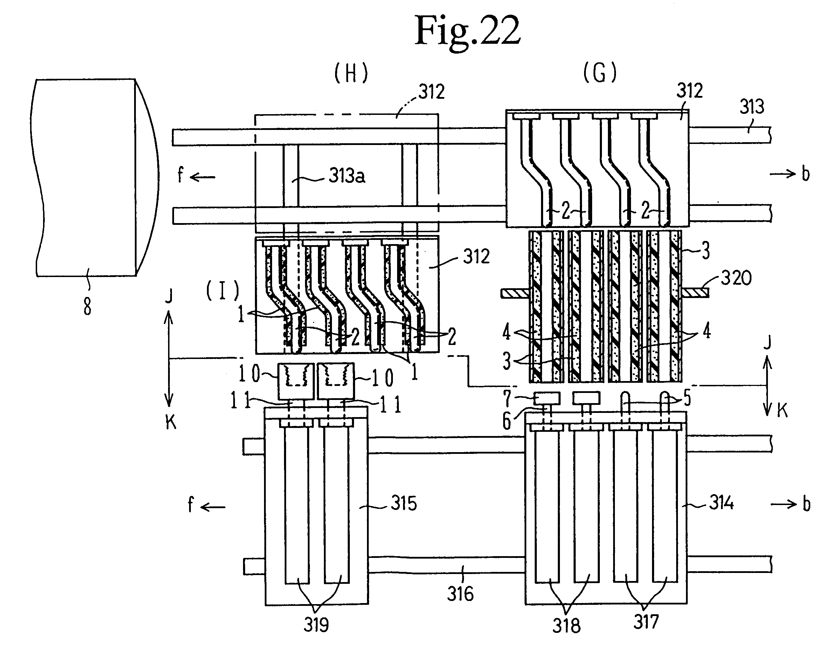

Figures 22 to 24 explain a device for simultaneously shaping a lot of bent rubber pipes being a fifth embodiment used in the present manufacturing method. The manufacturing device, as shown in Figure 22 being a plan view of the whole device, is constituted by mandrel bases 312, guide rails 313, a first work stand 314, pushing and die lubricant applying means supported on the first work stand, a second work stand 315, an extracting device supported on the second work stand 315, work stand rails 316, the guide member 3 as well as a vulcanizing device 8.

A plurality of mandrel bases 312 are used, on each of which plural rows of mandrels 2 are mounted at each base portion 2a. The mandrel base is possible to advance and retract to the vulcanizing device 8 on the guide rails 313 built toward the vulcanizing device 8.

In the following description, the displacement direction of the mandrel base 312 shows at character "f" a direction advancing toward the vulcanizing device 8, and at "b" a direction retracting from it.

The mandrel base 312 is able to occupy a first position (G) in the fitting step and a second position (H) for the extracting step, as fundamental positions displacing of the guide rails 313. Further, the mandrel base 312 is capable of moving on siding rails 313a toward a siding position (I) provided between the guide rails 313 and the work stand rails 316. The siding rails 313a are connected at one end thereof to the guide rails 313 at the second position (H) and intersect the guide rails 313, and the other end extends near the work stand rails 316 in the siding position (I).

Further, in Figure 22, two mandrel bases 312 are shown in a condition displaced separately to the first position (G) and the siding position (I). At the first position (G), the guide members 3 corresponding in number to the mandrels 2 are arranged concentrically with the axis of the mandrels 2.

The first work stand 314 and the second work stand 315 are able to displace on the work stand rails 316 parallel to the guide rails 313, the guide members 3 being arranged between the guide rails 313 and the work stand rails 316.

On the first work stand 314 are mounted plungers 317,318 having their axial direction to coincide with the guide member 3, and on the plunger 317 is provided the nozzle 5 extensibly.

Accordingly, the semi-finished rubber products 4 gripped by the plural guide members 3 are possible to perform once the operation which applies the die lubricant to the inner surfaces of the one part (two rows on the right of Figure 22 in the fifth embodiment) of the products 4 by the nozzle 5 and the operation which pushes out, at the same time, the other part (two rows on the left of Figure 22 in the fifth embodiment) by means of the arm 6 and the head 7.

Further, as mentioned hereinafter, the mandrel is provided at plural steps, and also the plungers 317,318 corresponding to the mandrel have plural steps, respectively.

The second work stand 315 is able to displace up to the vicinity of the siding position (I), and on the stand, is provided plungers 319 parallel to the plungers 317,318, the arm 11 projecting extensibly from each leading end of the plungers 319. The gripping member 10 mounted on the leading end of each arm 11 is able to grip the periphery of the end of the bent rubber pipe 1 fitted on the mandrel 2 on the mandrel base 312 at the second position (H), when the arm 11 has extended toward the second position (H).

The number of steps of the plunger 317,318,319 corresponds to the number of steps of the mandrel 2, but the number of rows may be set arbitrarily within a scope of the number of rows of the mandrel 2.

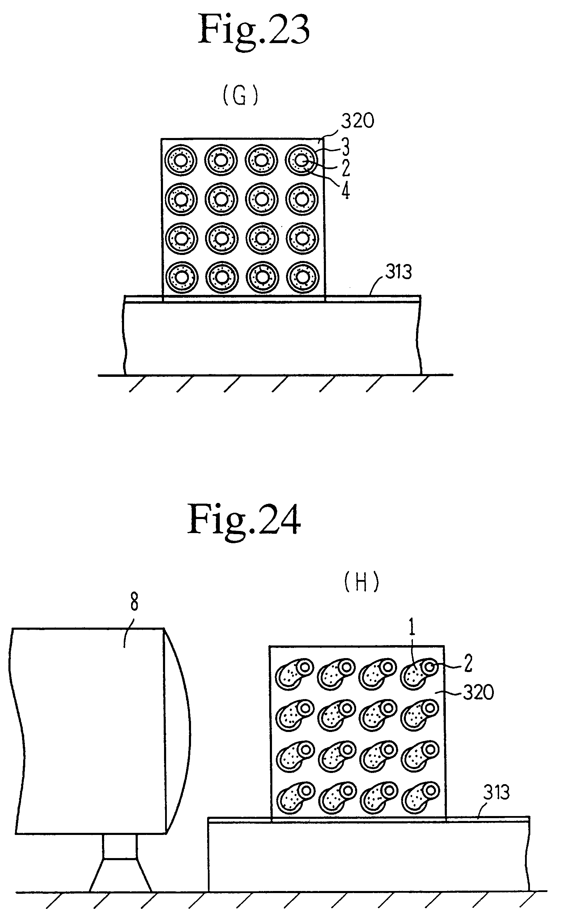

Figures 23 and 24 are views seen from a direction of arrow J of Figure 22. As apparent from Figure 23, the mandrels and the guide member 3 are provided with the same numbers and the plural rows in a lateral direction and with the plural steps in upper and lower directions, respectively. However, these numbers can be arbitrarily set. Further, the guide member 3 is supported on a stationary frame 320.

Figure 24 shows a condition immediately after vulcanizing in which the mandrel base 312, having emerged from the vulcanizing device 8, has been displaced to the second position (H), the bent rubber pipes 1 being fitted on the periphery of each mandrel 2 at a condition fixed in its shape by the vulcanization.

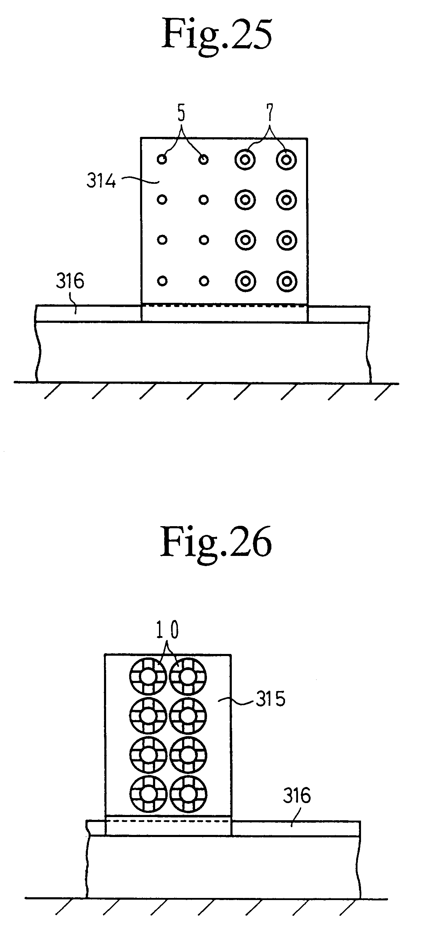

Figures 25 and 26 are views seen from a direction of arrow K in Figure 22, and as apparent from these Figures, the nozzle 5, the head 7 and the gripping member 10 are provided in the same number of steps as that of the mandrel 2 in the upper and lower directions.

The following description is made about the fifth embodiment. In Figure 22, first of all, when the one mandrel base 312(a) (312(a) and 312(b) are used hereinafter to distinguish one mandrel base 312(a) from the other mandrel base 312(b)) is displaced to the first position (G), each mandrel 2 and the guide members 3 are arranged on the same axis.

Then, the semi-finished rubber products 4 are inserted in the guide members 3 and further, the first work stand 314 is displaced so that the nozzles 5 become concentric with the two rows of guide members 3 at the left of the Figure. The nozzles 5 are expanded by the plungers 317 to insert into the semi-finished rubber products 4, and the die lubricant is applied to the inner surface of the semi-finished rubber products 4.

Thereafter, the first work stand 314 is displaced in the direction of arrow "b" in Figure and the nozzles 5 are adapted to agree with the remaining two rows of guide members 3 on the right side, as well as the head 7 being adapted to agree with the two rows of guide members 3 of the left side.

In this condition, if the plungers 317,318 are displaced simultaneously and the nozzle 5 and the arm 6 are extended, the nozzles 5 apply the die lubricant to the inner surfaces of the semi-finished rubber products 4 of the two right rows, and at the same time, the arm 6 pushes the ends of the two left rows of semi-finished rubber products 4 since the heads 7 enter into the two left rows of guide members 3.

The semi-finished rubber product 4 pushed by each of the heads 7 is supported freely to displace in a direction of its length to the inside of the guide member 3, and because the axis of the latter coincides with that of the mandrel 2, the product 4 is not bent by buckling on this side of the mandrel and is pushed out and fitted on the periphery of the mandrel 2.

Thereafter, if each of the heads 7 is retracted and the first work stand 314 is again displaced in the direction of arrow "b" so as to push the semi-finished rubber products 4 of the two right remaining rows, the whole array of semi-finished rubber products 4 are fitted on the mandrels 2.

During this process, the other mandrel base 312(b) is displaced to the second position (H), having emerged from the vulcanizing device 8 after completing the vulcanizing step, and the extracting step is advanced simultaneously.

At this time, the second work stand 315 displaces up to a position near the mandrel base 312(b) on the work stand rails 316, and firstly the gripping members 10 arranged in two rows adopt positions corresponding to the left two rows of the bent rubber pipes 1 on the mandrel base 312.

In this position, the arms 11 are extended by actuation of the plungers 319 and the periphery of the end portions of the bent rubber pipe 1 are gripped by the gripping members 10. Then, if each arm 11 is retracted in the axial direction of the mandrel 2, the bent rubber pipe 1 gripped by the gripping member 10 is extracted from the mandrel 2.

After this, if the second work stand 315 is displaced in the direction of arrow "b", it is possible to successively extract the bent rubber pipes 1 of the two right rows in the same manner.

When completing the extracting step, the mandrel base 312(b) displaces on the siding rails 313a up to the siding position (I), and the mandrel base 312(a) displaces on the guide rails 313 in the direction of arrow "f" so as to enter into the vulcanizing device 8 thereby to pass the vulcanizing step which vulcanizes the semi-finished rubber products 4 on the mandrel 2 at a required condition.

The mandrel base 312(b) of the siding position (I) displaces to the first position (G) again on the guide rails 313 via the second position when the mandrel base 312(a) is still in the vulcanizing device 8 and enters into the fitting step.

Thereafter, the mandrel base 312 (a), having emerged from the vulcanizing step 8 after completing the vulcanizing step, displaces to the second position (H) so as to enter in the extracting step. At this time, front and rear positions of the mandrel bases 312 (a) and (b) replace each other on the guide rails 313.

After this, by repeating the operations mentioned above, the continuous shaping is enabled by the two mandrel bases 312 (a) and (b). Further, it is possible to control manually or automatically the displacements of the mandrel bases 312 (a) and (b), the first work stand 314 and the second work stand 315, as well as the operations of the plungers 317,318 and 319.

Thus, by fitting the semi-finished rubber products 4 via the guide member 3, the fitting of the semi-finished rubber products 4 to the mandrel 2 becomes smooth and it is possible to shorten significantly the operating time. It is also possible further to improve efficiency by adopting the possible automation.

Also, since the die lubricant is applied only on the inner surface of the semi-finished rubber product 4 during the fitting step by the nozzle 5, it is possible to omit the application to unnecessary portions, such as the outer surfaces so as to be economical and healthy and by the possible automation, the operating efficiency is improved even in this point.

Further, since the system is designed to extract the bent rubber pipe 1 remaining at the relatively high temperature immediately after vulcanizing by gripping it with the gripping member 10, the operator can be released from a severe operating environment having a high temperature and high humidity, and since it is unnecessary to take the frequent rest times during the operations which can be performed continuously over a long period, the shaping cycle becomes short and the operating efficiency is improved significantly.

Furthermore, since the system can perform continuously the die lubricant applying step, fitting step, the vulcanizing step and the extracting step, and the shaping time is shortened significantly and can be automated, it is suitable for mass production.

Also, even if the mandrel 2 and guide member 3 are provided in plural rows and plural steps, and further a plurality of mandrel bases are used, such as 312 (a) and (b), each mandrel base is capable of performing simultaneously a separate step from the other by providing the siding position (I), and since the front and rear positions of each of the mandrel bases 312 (a) and (b) can be replaced, they are possible to circulate continuously between each step, respectively.

Therefore, the plural mandrel bases 312 can be used at once, and further, the performance of the bulk production is improved.

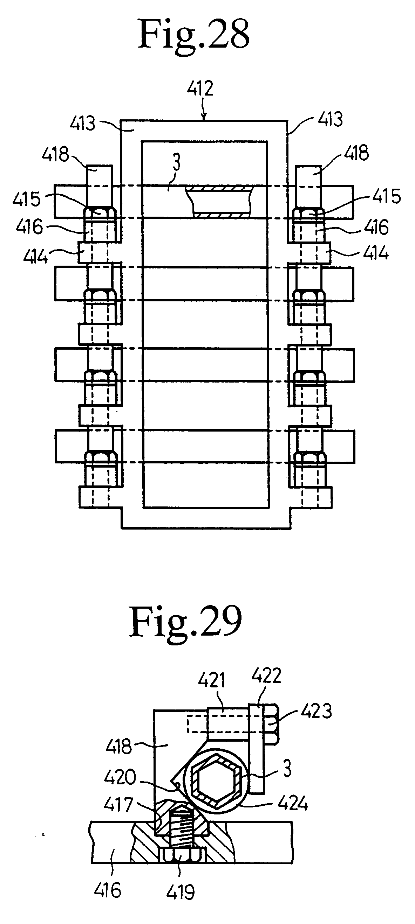

On the basis of Figures 27 to 38, one embodiment is explained in respect to the guide member and the mandrel base of the device for shaping simultaneously a lot of bent rubber pipes. Figures 27 to 31 show a sixth embodiment in respect to the mounting of the guide members 3. In these Figures, Figure 27 is a partial front view showing a supporting base 412 for the guide members, and Figure 28 is a side view (seen in a direction of arrow M in Figure 27).

In these Figures, the supporting base 412 for the guide members is a member forming a quadrate frame in left and right directions thereof (radial direction of the guide member 3, see Figure 27), as well as front and rear directions (length direction of the guide member 3, see Figure 28). Mounting seats 414 are formed at spacings Y1, Y2, Y3 in upper and lower directions of each left and right frame 413 (its right side is omitted in Figure 27), and one end of a supporting plate 416 is fixed by means of bolt 415.

The supporting plate 416 is suspended between the left and right frames 413 of both sides, grooves 417 are formed in the upper surface thereof at spacings X1, X2, X3, a lower end portion of a V-block 418 fitting into this groove 417 and being fixed by a bolt 419.

The V-block 418 is used to direct a V-groove 420 in a lateral direction, and in a condition fitting the guide member 3 in the V-groove 420, an upper end portion of a holding plate 422 is fixed on an upper end portion of the V-block 418 through the intermediary of a collar 421 having a length equal to about the radius of the guide member 3 by means of a bolt 423.

The supporting plate 416, the V-block 418, the collar 421, the holding plate 422 or the like are one embodiment of positioning means according to the present invention, and as apparent from Figure 28, they are provided similarly in the front and rear directions. Then, when the guide member 3 is mounted on the V-block 418, each central position is always positioned positively at the spacings X1, X2, X3 in the left and right directions and Y1, Y2, Y3 in the upper and lower directions.

Also, even if the outer diameter of each guide member 3 differs, the distance of respective central position, always, remains constant. Accordingly, if this central position coincides previously with each central position of a free end 402b of each mandrel 402, each guide member 3 can be centered at high precision to coincide with the axis of the mandrel 402, and the mounting of the guide member 3 becomes rapid and simple, whereby the efficiency of the centering and mounting operations can be improved significantly.

Figure 29 is a seventh embodiment showing a mounting manner in the case that the guide member 3 has a non-circular cross section. In such a case, a circular ring 424 is mounted on the periphery of the guide member 3, so that the positioning can then be similar to that of the circular cross section.

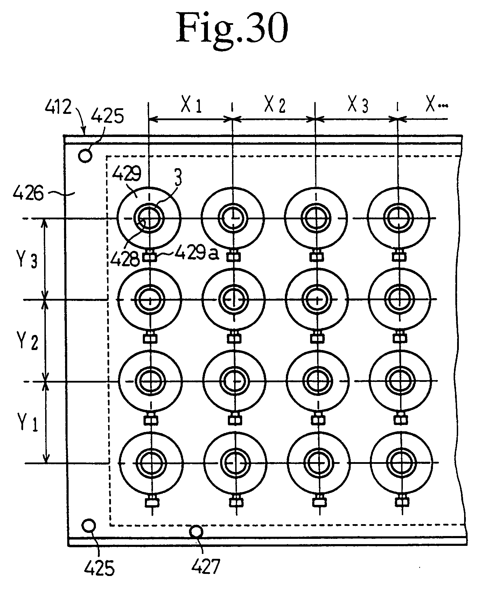

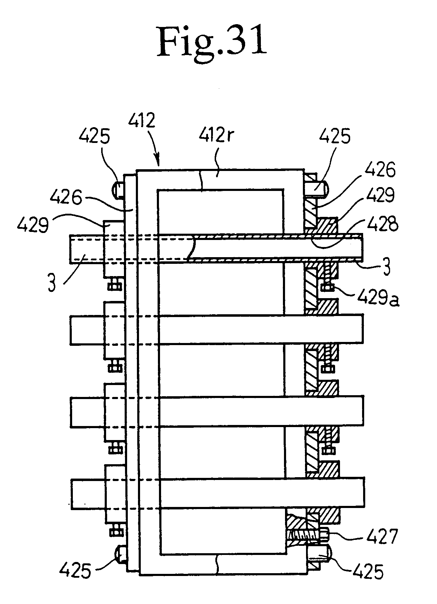

Figures 30 and 31 are views showing another positioning means being an eighth embodiment, Figure 30 corresponding to Figure 27 and Figure 31 to Figure 28, respectively. Pins 425 are formed to project forwardly and rearwardly at four front and rear corners of the supporting base 412 similar to the seventh embodiment. On the pins is engaged each corner portion of a pair of front and rear supporting plate 426, and the pin is fixed to the supporting base 412 by a bolt 427. Further, Figure 31 is cut away at its right side, whereby the right side of the supporting base 412 can be seen.

Each of the supporting plates 426 has an area sufficient to cover the front surface or the rear surface of the supporting base 412, respectively, and a lot of circular bores 428 are formed so that their centres are at spacings X1, X2, X3 in the left and right directions and Y1, Y2, Y3 in the upper and lower directions. Into these bore are fitted bushes 429, the outer diameter of which corresponds to the diameter of the circular bore 428 and the inner diameter is equal to about the periphery of the guide member 3.

If each of the guide members 3 is extended through each bush 429 of the front and rear supporting plates 426 and each bush 429 and each guide member 3 are secured by means of a set screw 29a, each guide member 3 is always positioned positively at spacings X1, X2, X3 in the left and right direction as well as Y1, Y2, Y3 in the upper and lower directions.

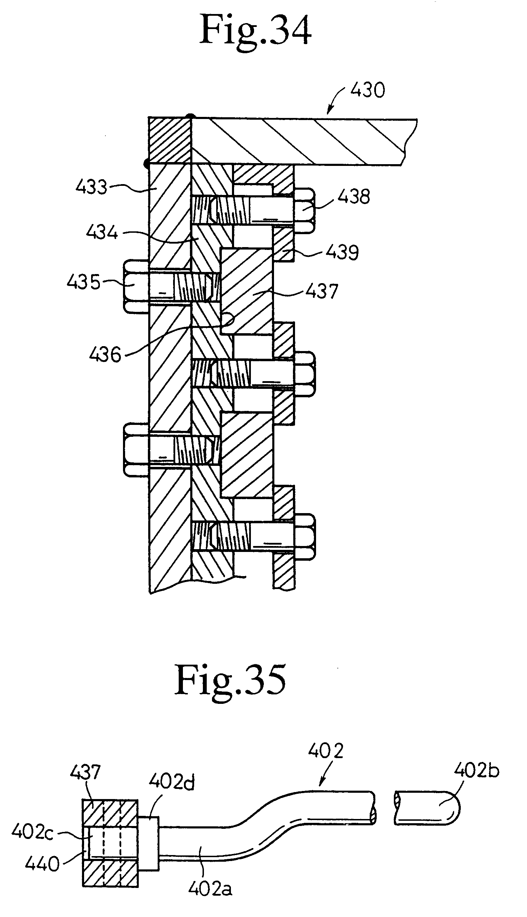

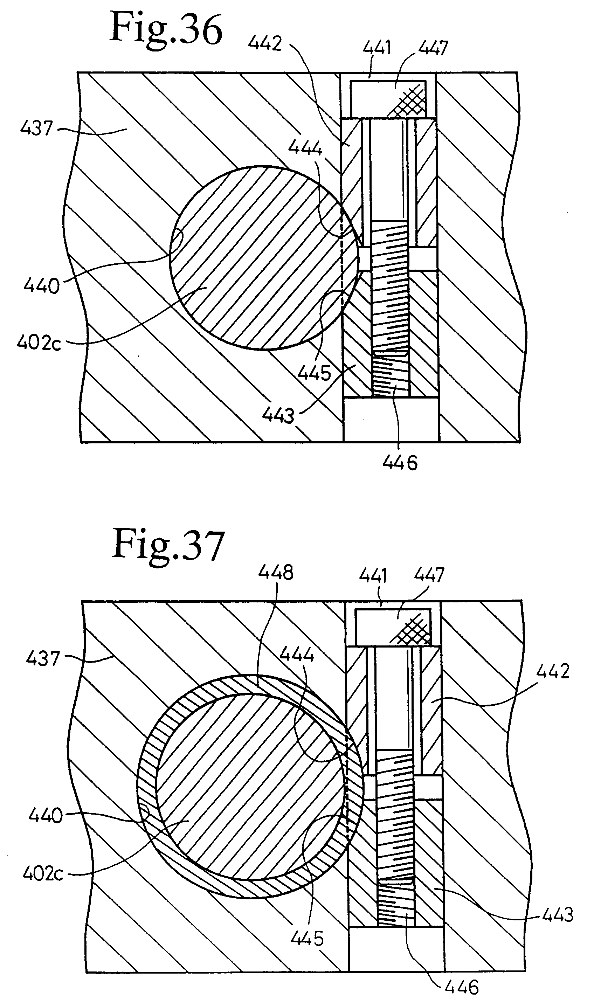

Figures 32 to 38 are views showing a mandrel base 430 in a condition mounting the mandrel 402 of the device for shaping simultaneously a lot of bent rubber pipes. Figure 32 is a cross sectional view (cut away at the right side) taken along line XXXII-XXXII in Figure 33 showing a side view (cut away at the right side) of the mandrel base 430 being the ninth embodiment. Figure 34 is an enlarged cross sectional view taken along line XXXIV-XXXIV in Figure 32. Figure 35 is an enlarged cross sectional view taken along line XXXV- XXXV in Figure 32. Figure 36 is an enlarged cross sectional view taken along line XXXVI-XXXVI in Figure 33. Further, as shown in Figure 35, the mandrel 402 has a mounting end 402c and a mounting flange 402d at an end of a base portion 402a of the side opposite to a free end 402a.

In these Figures, the mandrel base 430, similarly to the aforesaid supporting base 412 for the guide members is a member forming a quadrate frame in left and right directions thereof (radial direction of the mandrel 402, see Figure 32), as well as front and rear directions (length direction of the mandrel 402, see Figure 33). Pins 432 are formed to project to the rear at upper and lower end portions of each left and right frame 431b, i.e. projecting in the direction in which the free end 402a of the mandrel 402 projects (Figure 32 omits the right side).

As apparent from Figure 34, near each front left and right frame 431a is provided in upper and lower directions a supporting frame 433 connected to upper and lower end portions of a front side of the mandrel base 430 at both ends thereof. Upper and lower positioning members 434 overlapped on the supporting frame are fixed to the latter by means of a bolt 435. In the supporting frame 433 are provided positioning grooves at an equi-distance in upper and lower directions, and an end portion of a mounting plate 437 is fitted in the positioning groove. The mounting plate is secured by a suppressing plate 439 mounted on the upper and lower positioning member 434 by the bolt 435.

The mounting plate 437 is suspended between the left and right supporting frames 433, and mandrel mounting bores 440 are formed at an equi-distance in its length direction. A bore diameter of the mandrel mounting bore is somewhat larger than an outer diameter of the mounting end portion 402c, and as shown in Figure 35, the latter is fitted in the mandrel mounting bore 440. At this time, the mounting flange 402d abuts the surface of the mounting plate 437.

As shown in Figure 36, in upper and lower directions of a thickness of the mounting plate 437 is a formed a through bore 441 intersecting to an inner wall surface of the mandrel mounting bore 440. Tapered surfaces 444,445 are formed on opposed leading ends of a pair of hollow fixed pins 442,443 inserted from the upper and lower directions, and a female thread 46 is formed in an axial bore of the lower, hollow fixed pin 443.

Then, the mounting end portion 402c is rotatably fitted into the mandrel mounting bore 440 and a bolt 447 is inserted into the axial bores hollow fixed pins 442,443 inserted into the through bore 441. When the bolt 447 is tightened, because the opposed leading ends of the hollow fixed pins 443,443 approach each other, and respective tapered surfaces 444,445 contact forcedly with an outer periphery of the mounting end portion 402c, the latter is secured to the mounting plate 437 at a condition prevented from rotating and falling.

Further, in a case that the mounting end portion 402c is of a soft material, it deforms by tightening the bolt 447 and looseness and breakage may occur. Then, in such a case, a hard collar 448 is fitted on the periphery of the mounting end portion 402c, as in a tenth embodiment shown in Figure 37.

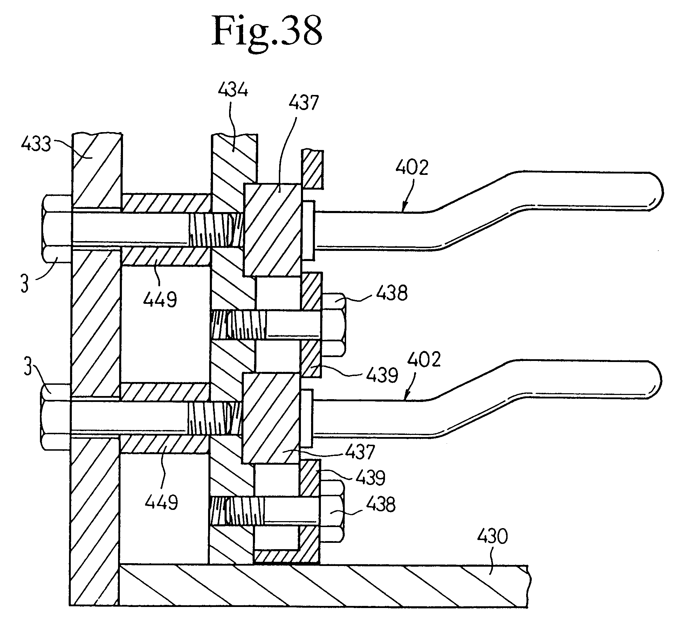

Figure 38 is an eleventh embodiment showing a mounting manner of the upper and lower positioning member 434 where the mandrel 402 is short in its whole length. In such a case, a relatively long collar 449 is inserted between the supporting frame 433 and the upper and lower positioning member 434 and can be mounted by a long bolt 435.

As shown in Figure 33, a set plate 450 is engaged on a rear surface of the mandrel base 430 by means of pin 432. In the set plate 450 are formed over the whole surface positioning bores 451 for allowing the free end 402b of the mandrel 2 to pass through it and position it.

Positions for forming the positioning bore 451 correspond to the positions of the free ends 402b in Figure 32, and the central position is formed at the spacings X1, X2, X3 in the left and right directions and at the spacings Y1, Y2, Y3 in the upper and lower directions, corresponding to the spacings of the central positions of the guide members 3. Further, a mounting central position of the mounting end portion 402c becomes in a position offset from X1, X2, X3 and Y1, Y2, Y3 by x1, x2, x3 and y1, y2, y3, respectively.

Then, firstly as mentioned above, when the mounting end portion 403c is fitted rotatably into the mandrel mounting bore 440 and secondly, the set plate 450 passing the free end 402b into the positioning bore 451 is engaged to the pin 432 of the rear surface of the mandrel base 430, since the position of the free end 402b is exactly positioned, if the mounting end portion 402c side is fixed at this condition and thereafter the set plate 450 is removed, the mandrel 402 is mounted exactly on the mandrel base 430, and is centered in its better precision on the same axis of the guide member 3.

Further, in the case that the mandrels having different shapes are included, by using the set plate 450, since the free end 402b is possible to fix rapidly and simply the mounting end portion 402c at the condition positioned exactly, the centering and mounting operations become very advantageous.

Thus, it is possible to satisfy any of the following mounting conditions of the mandrel 402:
1. To be able to position exactly the free end 402b;
2. To resist the pushing force occurring when fitting the semi-finished rubber product 4;
3. To resist a tension force when extracting the bent rubber pipe 1 after vulcanizing; and
4. To resist rotating force when pushing or pulling.
The mandrel can be mounted rapidly and exactly, whereby it is possible to improve the operating performance of the centering and mounting operations to the guide member 3.

Further, the guide member and mandrel base of the device for shaping simultaneously a lot of bent rubber pipes are not limited to the aforesaid embodiments, but various modifications are possible. For example, the illustrated conditions in respect to the number of the guide members, the number of the positioning means, as well as the number of the mandrels corresponding to the number of the positioning means, are shown as an example; they are capable of freely increasing and decreasing.

## Claims

1. A method for manufacturing a bent rubber pipe comprising a fitting step of placing a straight pipe-like semi-finished rubber product (4) of unvulcanized or semi-vulcanized rubber on a curved mandrel (2), the fitting steps comprising arranging a rectilinear guide member (3) on the same axis as that of the mandrel (2), and pushing the semi-finished rubber product (4) from said guide member (3) onto said mandrel (2) by pushing an end thereof remote from the mandrel, so as to fit the semi-finished rubber product (4) on the mandrel (2); a vulcanizing step of forming a rubber pipe (1) fixed in a curved shape by heating and vulcanizing the semi- finished rubber product (4) in a condition fitted on the mandrel (2); and an extracting step of removing the vulcanized rubber pipe (4) from the mandrel (2), characterized in that die lubricant (221) is applied only on an inner surface of the semi-finished rubber product (4) before the lubricated inner surface of the semi-finished rubber product contacts the mandrel during fitting of the semi- finished rubber product (4).

2. A method for manufacturing a bent rubber pipe according to claim 1, wherein the die lubricant (221) is applied only to the inner surface of the semi-finished rubber product (4), by inserting a nozzle (212) into the semi-finished rubber product (4) whilst it is supported on the guide member (3) and discharging the die lubricant (221) from the nozzle (212).

3. A method for manufacturing a bent rubber pipe according to claim 2, wherein the guide member (3) is tubular and the semi-finished rubber product (4) is supported in a hollow portion of the guide member (3), whereby the die lubricant (221) is applied while the nozzle (212) displaces in an axial direction in the semi-finished rubber product (4).

4. A method for manufacturing a bent rubber pipe according to claim 2, wherein the die lubricant (221) is applied to the inside of the semi-finished rubber product (4), by inserting the guide member (3) into the semi-finished rubber product (4), by utilizing the guide member (3) as a nozzle by providing a delivery passage (227) for die lubricant in the guide member (3) and a discharge port (226) communicating with the delivery passage, and by pushing the semi-finished rubber product (4) from the guide member (3).

5. A method for manufacturing a bent rubber pipe according to any preceding claim, wherein for the extracting step, a periphery of one end of the rubber pipe (1) is gripped by a gripping member (10) at a condition of relatively high temperature immediately after vulcanizing, and the gripping member (10) is pulled along the axial direction of the mandrel (2), whereby the rubber pipe (1) is extracted from the mandrel (2).

6. A device for manufacturing a bent rubber pipe by placing a straight pipe-like semi-finished rubber product (4) of unvulcanized or semi-vulcanized rubber on a curved mandrel (2), and heating and vulcanizing the semi-finished rubber product in a condition fitted on the mandrel, the device comprising a curved mandrel (2), a straight guide member (3) arranged on an axis identical to that of the mandrel (2) for supporting the straight pipe-like semi-finished rubber product (4), and pushing means (7) for pushing the semi-finished rubber product (4) from the guide member (3) onto the mandrel (2) by pushing an end thereof remote from the mandrel (2), characterised in that the device comprises means (212) for applying die lubricant (221) only to an inner surface of the semi-finished rubber product (4) before the lubricated inner surface of the semi-finished rubber product contacts the mandrel during fitting of the semi-finished rubber product (4) on the mandrel (2).

7. A device for manufacturing a bent rubber pipe according to claim 6, wherein the guide member (3) is a hollow member, in a hollow portion of which the semi-finished rubber product (4) is supportable.

8. A device for manufacturing a bent rubber pipe according to claim 7, wherein the pushing means is provided with a head portion (7) for pushing said end of the semi-finished rubber product (4), and a recess in the head portion (7) in which a free end of the mandrel (2) is capable of fitting.

9. A device for manufacturing a bent rubber pipe according to claim 7, wherein the pushing means is provided with a head portion (7) to push the said end of the semi-finished rubber product (4), and an air passage (16) is provided in the head portion (7) to communicate the inner space of the semi-finished rubber product (4) and an outer space of the head portion (7).

10. A device for manufacturing a bent rubber pipe according to claim 6, wherein the guide member (3) is arranged to be disposed inside the semi-finished rubber product (4) to support it.

11. A device as claimed in claim 6, comprising a mandrel base (312) from which the mandrel (2) projects in cantilever fashion and which is displaceable on guide rails (313) to a vulcanizing device (8), and an extracting device (10) arranged along the guide rails (313) at the free end of the mandrel (2), the guide member (3) being capable of guiding the semi-finished rubber product (4) along the axial direction of the mandrel (2), the pushing means (7) being provided at a position in which the guide member (3) is inserted between the guide rails (312) and being capable of pushing out the semi-finished rubber product (4) supported on the guide member (3) in the direction of the mandrel (2), and the extracting device (10) being capable of extracting the rubber pipe (1) from the mandrel (2) by displacing the gripping member (10) gripping a periphery of one end of the vulcanized rubber pipe (1) along the axial direction of the mandrel (2).

12. A device for manufacturing a bent rubber pipe according to claim 11, wherein work stand rails (316) are arranged parallel to the guide rails (313) to insert the guide member (3) therebetween, and the work stand rails (316) are adapted to freely displace thereon a first work stand (314) on which the pushing device (7) is provided and a second work stand (315) on which the extracting device (10) is provided, as well as a plurality of mandrel bases (312) adapted to support mandrels (2) in plural rows and plural steps, and siding rails (313a) one of which is connected to the guide rails (313) and the other of which extends to intersect the latter, the siding rails (313a) being provided to guide the mandrel bases (312) to a siding position provided between the guide rails (313) and the work stand rails (316).

13. A device for manufacturing a bent rubber pipe according to any of claims 6 to 10, wherein centering means (416,418,421,422) are provided on a supporting base of the guide member (3) to allow an axial center of the guide member (3) to coincide with an axial center of the mandrel (2), the guide member (3) being mounted on the supporting base of the guide member through the intermediary of the centering means.

14. A device for manufacturing a bent rubber pipe according to any of claims 6 to 10, wherein one end of the mandrel (2) is cantilevered on the mandrel base (312) and positioning means (434-439) is provided to arrange the other end of the mandrel (2) concentrically with the guide member (3).

## Patentansprüche

1. Verfahren zum Herstellen eines gebogenen Gummirohrs, umfassend
- einen Aufsetzschritt zum Plazieren eines geraden rohrartigen vorbearbeiteten Gummierzeugnisses (4) aus unvulkanisiertem oder halb vulkanisiertem Gummi auf einem gekrümmten Dorn (2), wobei die Aufsetzschritte umfassen:
Anordnen eines geraden Führungselements (3) auf derselben Achse, wie die des Dorns (2), und
Schieben des vorbearbeiteten Gummierzeugnisses (4) vom Führungselement (3) auf den Dorn (2) durch Schieben eines vom Dorn entfernten Endes desselben, um das vorbearbeitete Gummierzeugnis (4) auf dem Dorn (2) aufzusetzen;
- einen Vulkanisierschritt zum Formen eines Gummirohrs (1) fest in einer gekrümmten Form durch Erwärmen und Vulkanisieren des vorbearbeiteten Gummierzeugnisses (4) in einem auf den Dorn (2) aufgebrachten Zustand; und
- einen Abziehschritt zum Entfernen des vulkanisierten Gummirohrs (4) vom Dorn (2),
**dadurch gekennzeichnet,**
daß Werkzeugschmiermittel (221) lediglich auf eine Innenfläche des vorbearbeiteten Gummierzeugnisses (4) aufgebracht wird, bevor die geschmierte Innenfläche des vorbearbeiteten Gummierzeugnisses den Dorn während des Aufsetzens des vorbearbeiteten Gummierzeugnisses (4) berührt.

2. Verfahren zum Herstellen eines gebogenen Gummirohrs nach Anspruch 1,
wobei das Werkzeugschmiermittel (221) durch Einführen einer Düse (212) in das vorbearbeitete Gummierzeugnis (4), während dieses auf dem Führungselement (3) gehalten wird, und Abgeben des Werkzeugschmiermittels (221) aus der Düse (212) lediglich auf die Innenfläche des vorbearbeiteten Gummierzeugnisses (4) aufgebracht wird.

3. Verfahren zum Herstellen eines gebogenen Gummirohrs nach Anspruch 2,
wobei das Führungselement (3) rohrförmig ausgebildet ist und das vorbearbeitete Gummierzeugnis (4) in einem hohen Abschnitt des Führungselements (3) gehalten wird, wobei das Werkzeugschmiermittel (221) aufgebracht wird, während sich die Düse (212) in einer axialen Richtung im vorbearbeiteten Gummierzeugnis (4) verlagert.

4. Verfahren zur Herstellung eines gebogenen Gummirohrs nach Anspruch 2,
wobei das Werkzeugschmiermittel (221) auf die Innenseite des vorbearbeiteten Gummierzeugnisses (4) aufgebracht wird, durch Einführen des Führungselements (3) in das vorbearbeitete Gummierzeugnis (4), durch Verwenden des Führungselements (3) als eine Düse, durch Vorsehen eines Zuführdurchgangs (227) für Werkzeugschmiermittel im Führungselement (3) und einer Abgabeöffnung (226), welche mit dem Zuführdurchgang in Verbindung steht, und durch Schieben des vorbearbeiteten Gummierzeugnisses (4) vom Führungselement (3).

5. Verfahren zum Herstellen eines gebogenen Gummirohrs nach einem der vorangehenden Ansprüche,
wobei für den Abziehschritt ein Umfang eines Endes des Gummirohrs (1) durch ein Greifelement (10) in einem Zustand relativ hoher Temperatur unmittelbar nach dem Vulkanisieren ergriffen wird, und das Greifelement (10) längs der axialen Richtung des Dorns (2) gezogen wird, wodurch das Gummirohr (1) vom Dorn (2) abgezogen wird.

6. Vorrichtung zum Herstellen eines gebogenen Gummirohrs durch
- Positionieren eines geraden, rohrartigen, vorbearbeiteten Gummierzeugnisses (4) aus unvulkanisiertem oder halb vulkanisiertem Gummi auf einem gebogenen Dorn (2), und
- Erwärmen und Vulkanisieren des vorbearbeiteten Gummierzeugnisses in einem auf den Dorn aufgebrachten Zustand,
wobei die Vorrichtung umfaßt:
einen gekrümmten Dorn (2),
ein gerades Führungselement (3), welches auf einer Achse angeordnet ist, die zu der des Dorns (2) identisch ist, zum Halten des geraden rohrartigen vorbearbeiteten Gummierzeugnisses (4), und
ein Schiebemittel (7) zum Schieben des vorbearbeiteten Gummierzeugnisses (4) vom Führungselement (3) auf den Dorn (2) durch Schieben eines vom Dorn (2) entfernten Endes desselben,
**dadurch gekennzeichnet,**
daß die Vorrichtung umfaßt:
- Mittel (212) zum Aufbringen von Werkzeugschmiermittel (221) lediglich auf eine Innenfläche des vorbearbeiteten Gummierzeugnisses (4), bevor die geschmierte Innenfläche des vorbearbeiteten Gummierzeugnisses den Dorn während des Aufsetzens des vorbearbeiteten Gummierzeugnisses (4) auf dem Dorn (2) berührt.

7. Vorrichtung zum Herstellen eines gebogenen Gummirohrs nach Anspruch 6,
wobei das Führungselement (3) ein hohles Element ist, wobei in einem hohlen Abschnitt desselben das vorbearbeitete Gummierzeugnis (4) gehalten werden kann.

8. Vorrichtung zum Herstellen eines gebogenen Gummirohrs nach Anspruch 7,
wobei das Schiebemittel mit einem Kopfabschnitt (7) zum Schieben des Endes des vorbearbeiteten Gummierzeugnisses (4) und mit einer Ausnehmung im Kopfabschnitt (7) versehen ist, in welcher ein freies Ende des Dorns (2) aufgenommen werden kann.

9. Vorrichtung zum Herstellen eines gebogenen Gummirohrs nach Anspruch 7,
wobei das Schiebemittel mit einem Kopfabschnitt (7) versehen ist, um das Ende des vorbearbeiteten Gummierzeugnisses (4) zu schieben und ein Luftdurchgang (16) im Kopfabschnitt (7) vorgesehen ist, um den Innenraum des vorbearbeiteten Gummierzeugnisses (4) mit einem Außenraum des Kopfabschnitts (7) zu verbinden.

10. Vorrichtung zum Herstellen eines gebogenen Gummirohrs nach Anspruch 6,
wobei das Führungselement (3) innerhalb des vorbearbeiteten Gummierzeugnisses (4) zum Halten desselben angeordnet ist.

11. Vorrichtung nach Anspruch 6,
umfassend eine Dornbasis (312), von welcher der Dorn (2) auslegerartig vorsteht, und welche auf Führungsschienen (313) zu einer Vulkanisiervorrichtung (8) verschiebbar ist, und eine Abziehvorrichtung (10), welche längs der Führungsschienen (313) am freien Ende des Dorns (2) angeordnet ist, wobei das Führungselement (3) dazu ausgelegt ist, das vorbearbeitete Gummierzeugnis (4) längs der axialen Richtung des Dorns (2) zu führen, wobei das Schiebemittel (7) an einer Position vorgesehen ist, in welcher das Führungselement (3) zwischen die Führungsschienen (3 und 12) eingeführt ist, und dazu ausgelegt ist, das auf dem Führungselement (3) getragene vorbearbeitete Gummierzeugnis (4) in Richtung des Dorns (2) zu schieben, und wobei die Abziehvorrichtung (10) dazu ausgelegt ist, das Gummirohr (1) vom Dorn (2) durch Verlagern des einen Umfang eines Endes des vulkanisierten Gummirohrs (1) greifenden Greifelements (10) längs der axialen Richtung des Dorns (2) abzuziehen.

12. Vorrichtung zum Herstellen eines gebogenen Gummirohrs nach Anspruch 11,
wobei Arbeitsgestellschienen (316) parallel zu den Führungsschienen (313) angeordnet sind, um das Führungselement (3) dazwischen einzuführen, und wobei die Arbeitsgestellschienen (316) dazu ausgelegt sind, ein erstes Arbeitsgestell (314), auf welchem die Schiebevorrichtung (7) vorgesehen ist, und ein zweites Arbeitsgestell (315), auf welchem die Abziehvorrichtung (10) vorgesehen ist, ebenso wie eine Mehrzahl von Dornbasen (312), welche dazu ausgelegt sind, Dorne (2) in mehreren Reihen und mehreren Stufen zu tragen, frei auf diesen zu verlagern, und Ausweichschienen (313a), von denen eine mit den Führungsschienen (313) verbunden ist, und von denen die andere sich erstreckt, um letztere zu schneiden, wobei die Ausweichschienen (313a) vorgesehen sind, um die Dornbasen (312) in eine Ausweichposition zu führen, welche zwischen den Führungsschienen (313) und den Arbeitsgestellschienen (316) vorgesehen ist.

13. Vorrichtung zum Herstellen eines gebogenen Gummirohrs nach einem der Ansprüche 6 bis 10,
wobei Zentriermittel (416, 418, 421, 422) auf einer Haltebasis des Führungselements (3) vorgesehen sind, um zu ermöglichen, daß eine axiale Mitte des Führungselements (3) zu einer axialen Mitte des Dorns (2) fluchtet, wobei das Führungselement (3) auf der Haltebasis des Führungselements unter Zwischenwirkung der Zentriermittel montiert ist.

14. Vorrichtung zum Herstellen eines gebogenen Gummirohrs nach einem der Ansprüche 6 bis 10,
wobei ein Ende des Dorns (2) auslegerartig auf der Dornbasis (312) gehalten ist und Positioniermittel (434 - 439) angeordnet sind, um das andere Ende des Dorns (2) konzentrisch zum Führungselement (3) anzuordnen.

## Revendications

1. Procédé pour fabriquer un tuyau coudé en caoutchouc comprenant une phase d'emmanchement consistant à placer un produit en caoutchouc semi-fini (4) du type tube, droit, en caoutchouc non vulcanisé ou semi-vulcanisé, sur un mandrin courbe (2), les phases d'emmanchement consistant à disposer un élément guide rectiligne (3) sur le même axe que le mandrin (2), et à pousser le produit en caoutchouc semi-fini (4) de l'élément guide (3) sur ledit mandrin (2) en poussant une extrémité de ce produit qui est éloignée du mandrin de manière à emmancher le produit en caoutchouc semi-fini (4) sur le mandrin (2) ; une phase de vulcanisation consistant à former un tuyau de caoutchouc (1) fixé dans une forme courbe en chauffant et en vulcanisant le produit en caoutchouc semi-fini (4) à l'état emmanché sur le mandrin (2) ; et une phase d'extraction consistant à séparer le tuyau en caoutchouc (4) vulcanisé du mandrin (2), caractérisé en ce qu'un lubrifiant de moule (221) est appliqué exclusivement sur une surface interne du produit en caoutchouc semi-fini (4) avant que la surface interne lubrifiée du produit en caoutchouc semi-fini n'entre en contact avec le mandrin pendant l'emmanchement du produit en caoutchouc semi-fini (4).

2. Procédé pour fabriquer un tuyau coudé en caoutchouc selon la revendication 1, dans lequel le lubrifiant de moule (221) est appliqué exclusivement sur la surface interne du produit en caoutchouc semi-fini (4), par insertion d'une buse (212) dans le produit en caoutchouc semi-fini (4) pendant qu'il est supporté par l'élément guide (3) et en éjectant le lubrifiant de moule (221) par la buse (212).

3. Procédé pour fabriquer un tuyau coudé en caoutchouc selon la revendication 2, dans lequel l'élément guide (3) est tubulaire et le produit en caoutchouc semi-fini (4) est supporté dans une portion creuse de l'élément guide (3), de sorte que le lubrifiant de moule (221) est appliqué pendant que la buse (212) se déplace dans une direction axiale dans le produit en caoutchouc semi-fini (4).

4. Procédé pour fabriquer un tuyau coudé en caoutchouc selon la revendication 2, dans lequel le lubrifiant de moule (221) est appliqué sur la surface interne du produit en caoutchouc semi-fini (4) en insérant l'élément guide (3) dans le produit en caoutchouc semi-fini (4), en utilisant l'élément guide (3) en tant que buse grâce au fait qu'on prévoit un passage de distribution (227) pour le lubrifiant de moule dans l'élément guide (3) et un orifice de sortie (226) communiquant avec le passage de distribution, et en éjectant le produit en caoutchouc semi-fini (4) de l'élément guide (3).

5. Procédé pour fabriquer un tuyau coudé en caoutchouc selon une quelconque des revendications précédentes, dans lequel, pour la phase d'extraction, une périphérie d'une extrémité du tuyau en caoutchouc (1) est saisie par un élément de préhension (10) dans un état de température relativement élevée immédiatement après la vulcanisation, et l'élément de préhension (10) est tiré le long de la direction axiale du mandrin (2), de sorte que le tuyau en caoutchouc (1) est extrait du mandrin (2).

6. Dispositif pour fabriquer un tuyau coudé en caoutchouc en plaçant un produit en caoutchouc semi-fini (4) du type tube, droit, en caoutchouc non vulcanisé ou semi-vulcanisé, sur un mandrin courbe (2), et en chauffant et en vulcanisant le produit en caoutchouc semi-fini à l'état emmanché sur le mandrin, le dispositif comprenant un mandrin courbe (2), un élément guide (3) rectiligne disposé sur une axe identique à celui du mandarin(2) pour supporter le produit en caoutchouc semi-fini (4) du type tube droit, et des moyens de poussée (7) pour pousser le produit en caoutchouc semi-fini (4) de l'élément guide (3) sur ledit mandrin (2) en poussant une extrémité de ce produit qui est éloignée du mandrin (2), caractérisé en ce que le dispositif comprend des moyens (212) pour appliquer un lubrifiant de moule (221) exclusivement sur une surface interne du produit en caoutchouc semi-fini (4) avant que la surface interne lubrifiée du produit en caoutchouc semi-fini n'entre en contact avec le mandrin pendant l'emmanchement du produit en caoutchouc semi-fini (4) sur le mandrin (2).

7. Dispositif pour fabriquer un tuyau coudé en caoutchouc selon la revendication 6, dans lequel l'élément guide (3) est un élément creux, dans une portion creuse duquel le produit en caoutchouc semi-fini (4) peut être supporté.

8. Dispositif pour fabriquer un tuyau coudé en caoutchouc selon la revendication 7, dans lequel les moyens de poussée sont équipés d'une portion tête (7) servant à pousser ladite extrémité du produit en caoutchouc semi-fini (4), et d'un évidement de la portion tête (7) dans lequel une extrémité libre du mandrin (2) peut s'emboîter.

9. Dispositif pour fabriquer un tuyau coudé en caoutchouc selon la revendication 7, dans lequel les moyens de poussée sont munis d'une portion tête (7) pour pousser ladite extrémité du produit en caoutchouc semi-fini (4), et un passage d'air (16) est prévu dans la portion tête (7) pour mettre l'espace intérieur du produit en caoutchouc semi-fini (4) en communication avec un espace extérieur de la portion tête (7).

10. Dispositif pour fabriquer un tuyau coudé en caoutchouc selon la revendication 6, dans lequel l'élément guide (3) est agencé pour être disposé à l'intérieur du produit en caoutchouc semi-fini (4) pour le supporter.

11. Dispositif selon la revendication 6, qui comprend une base de mandrin (312) sur laquelle le mandrin (2) fait saillie en porte-à-faux et qui peut se déplacer sur des rails de guidage (313) vers un dispositif de vulcanisation (8), et un dispositif d'extraction (10) agencé le long des rails de guidage (313) au droit de l'extrémité libre du mandrin (2), l'élément guide (3) étant capable de guider le produit en caoutchouc semi-fini (4) selon la direction axiale du mandrin (2), les moyens de poussée (7) étant prévus dans une position dans laquelle l'élément guide (3) est placé entre les rails de guidage (313) et étant capables d'éjecter le produit en caoutchouc semi-fini (4) supporté sur l'élément guide (3) en direction du mandrin (2), et le dispositif d'extraction (10) étant capable d'extraire le tuyau en caoutchouc (1) du mandrin (2) en déplaçant selon la direction axiale du mandrin (2) l'élément de préhension (10) qui saisit une périphérie d'une extrémité du tuyau en caoutchouc (1) vulcanisé.

12. Dispositif pour fabriquer un tuyau coudé en caoutchouc selon la revendication 11, dans lequel les rails (316) des bancs de travail sont agencés parallèlement aux rails de guidage (313) pour placer l'élément guide (3) entre ces rails, et les rails (316) des bancs de travail sont adaptés pour qu'on puisse y faire circuler librement un premier banc de travail (314) sur lequel le dispositif de poussée (7) est prévu et un deuxième banc de travail (315) sur lequel le dispositif d'extraction (10) est prévu, ainsi qu'une pluralité de bases de mandrins (312) sont adaptées pour supporter des mandrins (2) en plusieurs rangées et en plusieurs étages et des rails de garage (313a) dont l'un est relié aux rails de guidage (313) et dont l'autre s'étend pour croiser ces derniers, les rails de garage (313a) étant prévus pour guider les bases de mandrins (312) vers une position de garage prévue entre les rails de guidage (313) et les rails (316) des bancs de travail.

13. Dispositif pour fabriquer un tuyau coudé en caoutchouc selon une quelconque des revendications 6 à 10, dans lequel des moyens de centrage (416, 418, 421, 422) sont prévus sur une base de support de l'élément guide (3) pour permettre à un centre axial de l'élément guide (3) de coïncider avec un centre axial du mandrin (2), l'élément guide (3) étant monté sur la base de support de l'élément guide par l'intermédiaire des moyens de centrage.

14. Dispositif pour fabriquer un tuyau coudé en caoutchouc selon une quelconque des revendications 6 à 10, dans lequel une extrémité du mandrin (2) est en porte-à-faux sur la base de mandrin (312) et des moyens de positionnement (434 à 439) sont prévus pour agencer l'autre extrémité du mandrin (2) concentriquement à l'élément guide (3).
